# EUROPEAN PATENT APPLICATION

(11) **EP 4 765 058 A1**
(43) Date of publication of application: **24.06.2026**
(21) Application number: 24222945.8
(22) Date of filing: 23.12.2024
(51) Int. Cl.: G07F 9/10, G07F 11/16, G07F 17/00

(54) **FOOD PROCESSING APPARATUS**

(71) Applicant: bk Group AG, 91628 Endsee (DE)
(72) Inventor: Wolfarth, Gerold, 97993 Creglingen (DE)
(74) Representative: Mollekopf, Gerd Willi

(57) **Abstract**

Food processing apparatus (2, 2a) is provided, in particular a pizza vending machine, comprising: a cabinet (3) with a front side (8) accessible for a user, the front side comprising a user operation panel (40), and a dispenser unit (23) having a dispenser output (26, 28) adapted to transfer a food portion (116) from the interior of the cabinet (3) to the outside of the cabinet; a food storage device (10, 10a) having a thermally insulated cooling chamber (50, 50a), a plurality of food storing locations (71) arranged in the cooling chamber (50, 50a) each adapted to store a food portion (116) to be processed, an output unit (66) arranged at a wall of the cooling chamber (50, 50a) and having an output opening (67) adapted for transferring a food portion from the interior of the cooling chamber to the outside of the cooling chamber (50, 50a), wherein the output unit (66) has a closing element (68) which is adapted to close the output opening (67) when no food portion is transferred and is adapted to open the output opening (67) when a food portion is transferred, and a first transport unit (64) arranged within the cooling chamber (50, 50a) and being adapted to transfer a food portion (116) from a selected one of the storing positions (71) to the output unit (66); a food processing unit (80, 81) adapted to process the food portion (116); and a second transport unit (120) arranged outside the cooling chamber (50, 50a) and being adapted to transfer a food portion from the output opening (67) of the output unit (66) to the dispenser unit (23) and/or to the food processing unit (80, 81).

## Description

### FIELD OF THE INVENTION

The present invention relates to a food processing apparatus, in particular a pizza vending machine.

### BACKGROUND

Pizza vending machines are known where a user can bake a pizza which is stored in a cooling chamber on demand. In the practical use the conventional pizza vending machines may malfunction due to jams in the internal transport of the food portion or the food processing may be slow from the user's point of view

### SUMMARY OF THE INVENTION

It is an object of the invention to provide a food processing apparatus which provides a processed food (like a baked pizza) in a reliable and fast way.

The invention is defined in the independent claim and preferred embodiments are set out in the dependent claims.

The invention relates to a food processing apparatus, in particular a pizza vending machine, comprising: a cabinet with a front side accessible for a user, the front side comprising a user operation panel, and a dispenser unit having a dispenser output adapted to transfer a food portion from the interior of the cabinet to the outside of the cabinet. The apparatus further comprises a food storage device having a thermally insulated cooling chamber, a plurality of food storing locations arranged in the cooling chamber each adapted to store a food portion to be processed, an output unit arranged at a wall of the cooling chamber and having an output opening adapted for transferring a food portion from the interior of the cooling chamber to the outside of the cooling chamber, wherein the output unit has a closing element which is adapted to close the output opening when no food portion is transferred and is adapted to open the output opening when a food portion is transferred, and a first transport unit arranged within the cooling chamber and being adapted to transfer a food portion from a selected one of the storing positions to the output unit. The apparatus further comprises a food processing unit adapted to process the food portion; and a second transport unit arranged outside the cooling chamber and being adapted to transfer a food portion from the output opening of the output unit to the dispenser unit and/or to the food processing unit.

A food portion is preferably a portion of food which may be for example a main dish or a side dish or a dessert. The example of a food portion described here is a pizza, but it may also be a tarte flambée or other comparable cooled or frozen food portion that may for example be baked and/or heated in an oven.

Preferably the food is to be processed in the food processing unit. Selectively a food portion may also be dispensed from the food processing apparatus upon respective selection by a user such that a cooled or frozen food portion is dispensed.

"Food portion" in the meaning of the claims may be an unpacked food portion or preferably a food portion stored in a food box as far as the food is transported. When the food portion is processed in the food processing unit, preferably the food portion is at least temporally not in the food box for example in an oven for baking the food. Preferably the food box is used for storing, transporting and presenting to the user the food portion.

As the food portion is preferably stored in a frozen state in the food storage device, the food portion may be used in the food processing apparatus also without using a food box. After the processing of the food portion, the food portion may have a self supporting consistence, for example if it is a baked pizza or tarte flambée.

Preferably a first and a second output unit are provided at the wall of the cooling chamber and the first transport unit can transport the food portion selectively to the first or second gate. The second transport unit may then be positioned selectively at the first or second gate at which e.g. a retainer device of the first transport unit is positioned for handing over the food portion.

Preferably a first and a second food processing unit are provided such that two food portions can be processed in parallel. In this way the second transport unit may thus deliver a second food portion to the second food processing unit while a first food portion is already processed in the first food processing unit.

Preferably the food processing apparatus comprises a first and a second food processing unit which are preferably modular units and/or which are identical in their configuration.

Preferably the one or the two food processing units can be removed from a rearward position within the outer cabinet through a service door and preferably when being removed the one or the two food processing units can be passed through an operation space of the second transport unit which may be positioned in a parking position at a lateral space of the operation space during removal and servicing of the first and/or second food processing unit.

Preferably the outer cabinet of the food processing apparatus comprises service doors and a loading door for servicing inner components of the apparatus and for replenishing food portions in the cooling chamber and all service and loading doors are (exclusively) arranged at the front 8 of the apparatus. Preferably no further doors are provided at the other sides of the apparatus outer cabinet.

Preferably the outer cabinet of the food processing apparatus has a roof extension and/or lateral air scoops to screen environmental occurrences (e.g. snow, rain, direct sunlight) from the front side of the apparatus.

### Cooling Chamber

In an embodiment the food processing apparatus further comprises a heat exchanger unit adapted to cool the interior of the cooling chamber and adapted transfer the heat from the cooling chamber to the exterior of the cabinet, wherein preferably the heat exchanger unit (83) is adapted to cool the interior of the cooling chamber to a temperature in the range of 2 °C to 8 °C, more preferably to a temperature in the range of -25 °C to - 2 °C.

Preferably the heat exchanger unit is a refrigeration and/or preferred a freezing unit and preferably comprises a first heat exchanger (evaporator) arranged in or at the cooling chamber, a second heat exchanger (condenser) arranged inside or outside the cabinet and a compressor conveying refrigerating means through the first and second heat exchangers. Preferably the cooling chamber has a service door for accessing the first transport unit which is arranged in the cooling chamber.

In an embodiment the cooling chamber comprises or houses one, two, three or more food storage units, wherein each food storage unit is adapted to store a plurality of food portions and is arranged on a movable support. The the cooling chamber may comprise an insulating cabinet having one door in a wall of the cabinet, preferably the front wall of the cabinet, for each one of the one, two, three or more food storage units. Alternatively or additionally the movable support of each of the food storage units is configured for pulling the respective food storage unit through the respective door out of the cabinet and for pushing it into the cabinet inner space.

"One, two, three or more food storage units means that there are one or two or three or more food storage units. For each one of the food storage units there may be a (separate) movable support and a (separate) door.

Preferably a food portion is stored in a food box at its respective position. The food box may be a cardboard box, in particular a paper box, and/or may have a liftable and/or pivotable cover. For example the food box is a pizza box with an upward pivotable lid.

In an embodiment the movable support is configured such that the respective one of the one, two, three or more food storage units can be fully extracted through the door. Alternatively or additionally the respective one of the one, two, three or more food storage units is releasably supported by the respective movable support such that the food storage unit can be unloaded from the respective movable support, in particular can be unloaded from the respective support when the food storage unit is fully extracted through the door. Alternatively or additionally an air-lock is associated to each one of the doors, which is adapted to close the opening through which the respective food storage unit has been fully extracted out of the opened door.

Preferably two, three or more food storage units are provided and in that each one of the food storage units can be extracted through its own associated door, the door size can be kept small. Therefore if the food storage unit is opened for refilling the food storage unit with food portions or for exchanging an empty food storage unit with a unit filled with food portions, the area of the cooling chamber that needs to be opened is kept smaller as compared to opening a door fully exposing all food storage units for refilling or exchange.

By the air-lock the air exchange and heat transfer through the opened door is minimized so that the cold condition within the cabinet is preserved.

Preferably each one of the food storage unit is releasable supported/mounted on its respective movable support. Then the restocking of food portions in the food storage unit is simplified/accelerated in that e.g. an empty or nearly empty food storage unit is released from its movable support and is replaced by another food storage unit which is already filled or populated with food portions.

Preferably each of the food storage unit is partitioned into two, three or more sub-elements like storage racks wherein each of the storage racks is releasably supported on the movable support such that smaller units as compared to the food storage unit can be released and reloaded.

In an embodiment each food storage unit has at each food storage position a rail-like support and a tray configured to receive a food portion thereon, wherein the tray is slidable supported on the rail-like support and wherein preferably the tray can be extracted from its food storage position.

By storing the food portions on a tray that is partially and optionally completely extractable from the storage position in the food storage unit, predefined conditions are provided for handling the food portion stored on the tray, namely the handling of the food portion like moving it can be made by a predetermined size and gripping positions at the tray independent of the food size or food container size in which the food portion is stored.

### First Transport Unit

In an embodiment the first transport unit may comprise a picking device adapted to load a food portion or a or the tray having a food portion thereon from the selected one of the food storing positions to the picking device and to unload the loaded food portion or the tray having the food portion thereon by positioning it at the output unit for handing over at the output unit or for unloading it to the output unit. The first transport unit may comprise a drive unit adapted to move the picking device to each one of the plurality of food storing positions and to a position at the output unit where the loaded food portion can be handed over to the output unit or to a second transport unit being part of the food processing device.

Preferably the drive unit has a first linear drive for moving the picking device along a first direction y and a second linear drive for moving the picking device along a second direction different to the first direction.

Preferably the first linear direction is perpendicular to the second linear direction and/or the first linear direction is the y-direction and the second linear direction is the z-direction.

Alternatively each one of the food storage units is movable in one direction and the drive unit is adapted to move the picking device in a second complementary (e.g. perpendicular) direction or each of the food storage units is rotatable like a carousel and the drive unit moves the picking device in a direction parallel to the rotation axis of the rotatable food storage unit.

In an embodiment the picking device comprises a movable actuator element adapted to push and/or pull a food portion or a or the tray having a food portion thereon and comprises a food portion receptacle. Preferably the movable actuator element is configured to transfer the gripped food portion or food storing box from its storing position in the food storage device into the food portion receptacle.

Preferably, when the food portion is placed on a tray, the movable actuator element is adapted to transfer the tray back to the food storing position in the food storage device, while the food portion is secured within the food portion receptacle.

Gripping a food portion or the tray having a food portion thereon also comprises that a storing box in which the food portion is stored is gripped or that the tray has a food storing box thereon in which the food portion is stored, respectively. Correspondingly the food portion receptacle is a receptacle for receiving the food portion or a or the food storing box in which the food portion is stored.

Preferably the grip element is arranged on a slid element and/or on a linear drive adapted to provide the extendibility of the grip element. For example the grip element is arranged on a telescopic extension.

Preferably after having loaded the food portion into the food portion receptacle (and preferably after having unloaded the tray from the receptacle), the first transport unit is adapted to move the picking device from the position at the selected food storing position in the food storage device (for example a position where a food portion receiving opening of the food storing position faces a food portion receiving opening of the picking device) to a position where a output unit is located (see details below). Preferably at the location of the output unit the movable actuator element is adapted to discharge the food portion at least partially out of the picking device (e.g. from the receptacle thereof) to the output unit.

Preferably the food portion receptacle is configured such that the food portion (preferably the food box in which the food portion is received) is confined and positioned within the receptacle such that it has a predefined longitudinal x and/or lateral y and/or height position z and/or the height extension Δz of the food portion is confined, e.g. by wall elements and/or stop elements. More preferably the food portion is received in a food box having a cover which is not secured to the box container and may swing partially open (e.g. the lid of a pizza box). To prevent this during movement of the food box, respective confinement elements are provided at the picking device, in particular at its receptacle.

In an embodiment the picking device comprises a or the movable actuator element adapted to push and/or pull a food portion received in the food portion receptacle out of the food portion receptacle. Preferably the movable actuator element is configured to push out the food portion from the food portion receptacle at a side of the food portion receptacle opposite to the side (98) at which the food portion has been transferred into the food portion receptacle. Alternatively or additionally preferably the movable actuator element is adapted to push out the food portion from the food portion receptacle only partially in a first linear movement sequence and is adapted to fully push out the food portion in a second linear movement sequence.

Preferably the food portion is received in a food box (as described before). By transferring the food portion at a first side of the picking device and discharging it therefrom at a second side opposite to the first side.

When the food portion is pushed out from the food portion receptacle in two linear movement sequences, preferably a first tappet element is used for the first partial discharging movement and a second tappet element is used for the second movement, wherein the first and second tappet elements are configured to interact with a side of the food portion (preferably a food box, more preferably a pizza box) and/or are arranged on a or the slide of the movable actuator element.

Preferably a loading slot of the guiding tunnel is provided on the loading side and a discharging slot if the guiding tunnel is provided on the opposite discharging side.

In an embodiment the picking device comprises a reader device adapted to read information from a food portion in which a food portion is stored and/or to detect whether a food portion is present at a storing position, where in particular the information is one or more of a badge number, an individual identification number of the food portion, a manufacturing date of the food portion, the expiry date of the food portion, and food preparation parameters to be used by the food processing unit.

Preferably the reader device is mounted at a or the guiding tunnel of the picking device, more preferably neighboring to a or the loading slot thereof.

Preferably the reader is adapted to read an identifier of the food portion /box like a barcode, a QR-code, a RFID tag or any other machine-readable identifier.

Preferably the information is read optically or by electromagnetic waves and/or the reader device is in data communication with a control unit of the food processing apparatus.

### Second Transport Unit

In an embodiment the second transport unit comprises a retainer device configured for storing a food portion during its transport with the second transport unit, wherein the retainer device preferably has a compartment for enclosing the food portion. Alternatively or additionally the second transport unit comprises a linear guide vertically oriented and on which a or the retainer device is vertically moveable, wherein the linear guide being preferably is supported by a horizontal cross beam (126) connected at least at one end of the linear guide and which is rotatable supported by a rotational bearing such that the linear guide can be rotated into a left and/or right side rotational position with respect to a front view to the food processing apparatus and or to a front or rear rotational position. Alternatively or additionally the second transport unit comprises a or the linear guide is supported on at least one horizontally oriented slide unit configured to horizontally move the linear guide.

Preferably a or the linear guide is configured to move a or the retainer device in vertical direction z.

By preferably providing a linear guide at one end of a horizontal cross beam which is rotatable supported at its other end at a rotational bearing, in the left or right positions of the linear guide a free passage at a side of the linear guide is enabled which may be used for example to extract a food processing unit from the rear to the front of the food processing apparatus for maintenance.

Preferably a food portion is handed over from the picking device of the first transport unit to the retainer device of the second transport unit through a gate in the cooling chamber.

In an embodiment the retainer device comprises a carriage adapted to support a food portion, and a linear drive configured for moving the carriage in and out of the compartment.

Preferably the retainer device is supported on a or the vertically running linear guide which is rotatably supported and wherein the retainer device is vertically movable by the linear guide and is rotatable by a rotational bearing supporting the linear guide or the retainer device.

In an embodiment the food processing unit comprises a loading/unloading section configured for temporary storing a food portion, and a processing section configured for processing a food portion. Optionally the food processing unit also comprises a cleaning section configured for cleaning a grille. The food processing unit may comprise a grille adapted to support a food portion and being supported by a grille conveying means, wherein the conveying means is configured to move the grille between the loading/unloading section and the processing section and optionally the cleaning section.

In an embodiment the loading/unloading section is configured to receive a food portion from the second transport unit and or wherein the loading/unloading section is adapted to receive a food portion in a food box and comprises a food box opening and/or food portion lifting device configured for opening a cover of a food box and/or to lift a food portion from a bottom surface within the food box, respectively.

In an embodiment the processing section comprises a first heater (185) configured for heating a food portion in a heating zone of the processing section from a first side and optionally a second heater configured for heating the food portion from a second side. Alternatively or additionally the optional cleaning section comprises a cleaning unit configured for cleaning the grille when being positioned in the cleaning section or during a movement of the grille when it is moved into and/or out of the cleaning section by the conveying means.

In an embodiment the food box opening and/or food portion lifting device comprises a lifter unit adapted to raise and lower pusher elements protruding upwards and which are configured to penetrate through at least one opening in a food box when the food box is placed in a predetermined position within the loading/unloading section and configured to raise a food portion stored in the food box and/or to open a cover of the food box.

Preferably the food box opening and/or food portion lifting device further comprises a lifting bar positioned under a food box when the food box is placed in a predetermined position within the loading/unloading section, wherein the pusher elements are positioned protruding from the lifting bar and the lifting bar is raised/lowered by the lifter unit.

In an embodiment the dispenser unit comprises a food output having a lock arrangement with a first and a second gate configured to prevent insertion of foreign elements into the outer cabinet of the food processing apparatus.

Preferably the food output has a food transport channel and wherein the second transport unit is adapted to dispose a food portion for discharging at the transport channel and configured to then push the food portion at least partially through the transport channel.

Preferably a first (e.g. upper) food output and a second (e.g. lower) food output are provided at the dispenser unit, which are preferably identical in construction.

Preferably the gates each have an interlock adapted to lock the first and second gates. The gates may be unlocked when a processed or frozen food portion is intentionally discharged through the slot to the outside of cabinet.

It is to be understood that the features mentioned above and those yet to be explained below can be used not only in the respective combinations indicated, but also in other combinations or in isolation. In particular, the features of the different aspects, embodiments and examples can be combined with each other unless noted to the contrary.

### BRIEF DESCRIPTION OF THE DRAWINGS

In the following figures examples are shown and described in further detail. In the drawings, like reference numerals refer to like elements.
- Fig. 1: shows a food processing device in top perspective view,
- Fig. 2: is a front view of the food processing device of Fig. 1.,
- Fig. 3: is a lateral cross sectional view along the section A-A in Fig. 2,
- Fig. 4: is a front view of the food processing device having its outer cabinet removed,
- Fig. 5: is a top perspective view of the cooling chamber shown in Fig. 4,
- Fig. 6: is a lateral view of the cooling chamber with storage drawers extracted,
- Fig. 7: is a lateral view to the loading side to one of the storage drawers shown in Fig. 6,
- Fig. 8: is a cross-section view along section A-A in Fig. 7,
- Fig. 9: shows a storage rack taken out from the storage shelf shown in Fig. 8,
- Fig. 10: shows the storage arrangement housed the cooling chamber with the storage shelves of Fig. 6 fully inserted and with a first transport unit,
- Fig. 11a: is the outer view of one of the output gates arranged at the sidewall of the cooling chamber (see Fig. 5),
- Fig. 11b: is the cross-section view of the output gate along section B-B in Fig. 11a in an opened state,
- Fig. 11c: is the cross-section view as in Fig. 11b in a closed state,
- Fig. 12: depicts a picking device of the first transport unit,
- Figs. 13a-f: show a sequence of loading into and discharging from the picking device of Fig. 12 a pizza box,
- Figs. 14a-b: show a front and a rear perspective view of a food processing unit,
- Fig. 15: shows a side view of the food processing unit of Fig. 14a,
- Fig. 16a: is a side view of a second transport unit arranged in the food processing unit of Fig. 14a,
- Fig. 16b: is the cross-section view of the second transport unit along section D-D in Fig 16a,
- Figs. 17a-c: show a retainer device of the second transport unit in perspective and cross-section views,
- Figs. 18a-d: show the oven unit of the food processing unit in perspective view, partially exploded view and in cross-section,
- Fig. 19: is a perspective view of the food processing unit with several covers removed and with a food box in loading/unloading position,
- Fig. 19a: is a perspective view of a pizza box as an example of a food box which is further defined in patent application EP 24 212 985.6 and included herein in full extent,
- Figs. 20a-f: show an output unit arranged at the front of the food processing device, and
- Fig. 21: shows an embodiment of the food processing device corresponding to Fig. 4, where instead of one cooling chamber two cooling chambers are provided.

### DETAILED DESCRIPTION OF THE DRAWINGS

In the following detailed description of embodiments of a food processing device 2 the device is exemplified by a pizza vending machine. However there is no limitation and instead other food portions than pizzas can be processed in the device, like tardes flambées, lasagnas, tortillas, and other food portions convenient to be ready-baked in an oven. The normal food-processing in the food processing device 2 provides the heating of the food portion in the device, but according to user's desire outputting of cooled or preferably frozen food portions stored in the device is also possible. Although in the cooling section of the device the food portions may be stored at cooling temperatures of 2 to 10 °C, the preferred food portion storing temperature is -15 to -5 °C, preferably -10 to -7 °C. For generating and efficiently keeping these lower storing temperatures, the thermal insulation properties of the cooling chamber 50 (which is actually a freezing chamber) and the cooling power of the refrigeration unit are configured correspondingly.

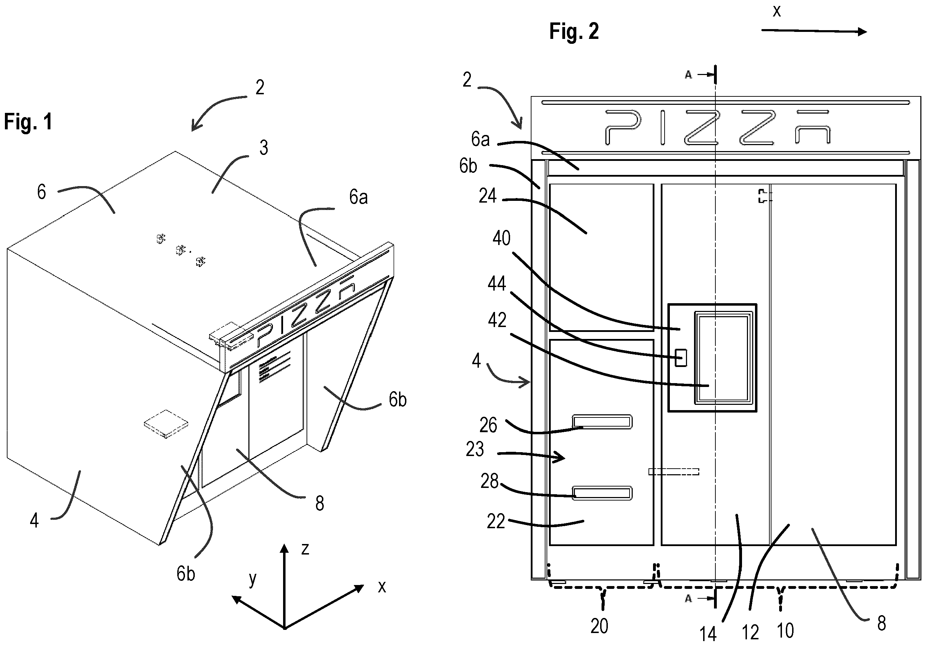

Fig. 1 shows the food processing device 2 in top perspective view. The outer cabinet 3 may be configured for all-side weather-shelter such that the device 2 can be installed and operated in different outside environments. However in embodiments the outer cabinet 3 may be less weather-resistant for installation and operation for example in an indoor environment.

The outer cabinet 3 shown in Fig. 1 has sidewalls 4, a top wall 6, a front wall 8 a bottom enclosure (not shown) and a rear wall (not shown). The top wall 6 has a roof extension 6a which extends beyond the base area to the front side such that the elements arranged at the front wall 8 have a screening against e.g. rain. Rearward inclined from the front of the roof extension 6a there is an additional shelter element in form of air scoops 6b at both lateral sides of the cabinet 3.

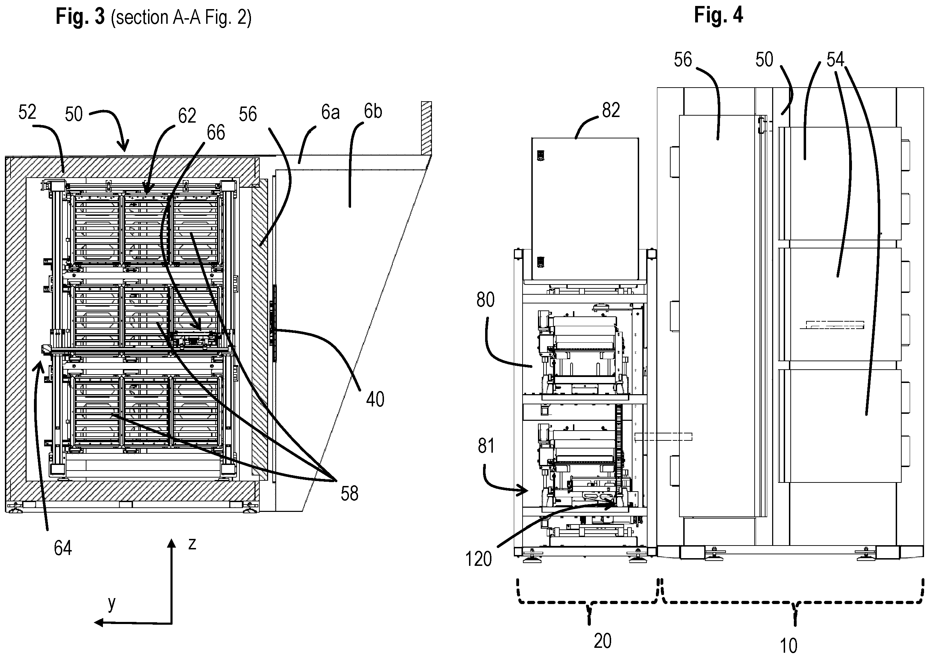

Fig. 2 is a front view of the food processing device 2 of Fig. 1., where the service doors/openings may be exclusively arranged at the front side 8. For example a food portions loading door 12 may be arranged at the right side, a first service door 14 is arranged in the middle region, a second service door 22 may be provided at the left lower region and a third service door 24 may be provided at the left upper region. When the loading door 12 is opened (e.g. by a service person) there is access to cabinet loading doors 54 (Fig. 4). When the first service door 14 is opened there is access to another chamber service door 56 (Fig. 3). The first service door 14 supports a user panel 40 including for example a user interface 42 (like a touch screen) where a user can input the selections and options for a selectable food portion type and optionally for food processing parameters. Further user panel 40 also comprises a payment unit 44 configured for payment transaction, e.g. where the goods selected by the user can be paid via credit card or cash or any other payment method.

The middle and right regions from front to rear of the device 2 functionally form the cooling section 10 and the left region from front to rear functionally form the processing/output section/storing 20.

Fig. 3 is a lateral cross-sectional view along the section A-A in Fig. 2, which is a section through the cooling/storing section 20. The large wall thickness of the insulating cabinet 52 and a chamber service door 56 closing a service opening in the insulating cabinet 52 can be seen. In the inner space of cabinet 52 a storage arrangement 62 for storing a plurality of food portions and a first transport unit 64 are provided. The first transport unit 64 may be denoted as stacker crane and enables independent linear movement of a picking device 65 in z- and y-directions. The storage arrangement 62 stores a plurality of food portions and has three storage drawers 58 - however there may by 1, 2, 3, 4 or more storage drawers.

Fig. 4 is a front view of the food processing device 2 having its outer cabinet 3 removed. Corresponding to the number of storage drawers 58, three chamber loading doors 54 are provided where each of the doors 54 covers an opening in the cooling chamber front wall such that when a door is opened the assigned one of the drawers can be pulled outward through an opening. In embodiments 1, 2, 3, 4 or more doors may be provided corresponding to the number of storage drawers. At the left region being the processing/output section 20 a first and a second food processing unit 80, 81 and a control unit 82 for controlling the overall operation of the food processing device 2 may be provided. The control unit 82 is positioned above the food processing units 80, 81 and close to the front side.

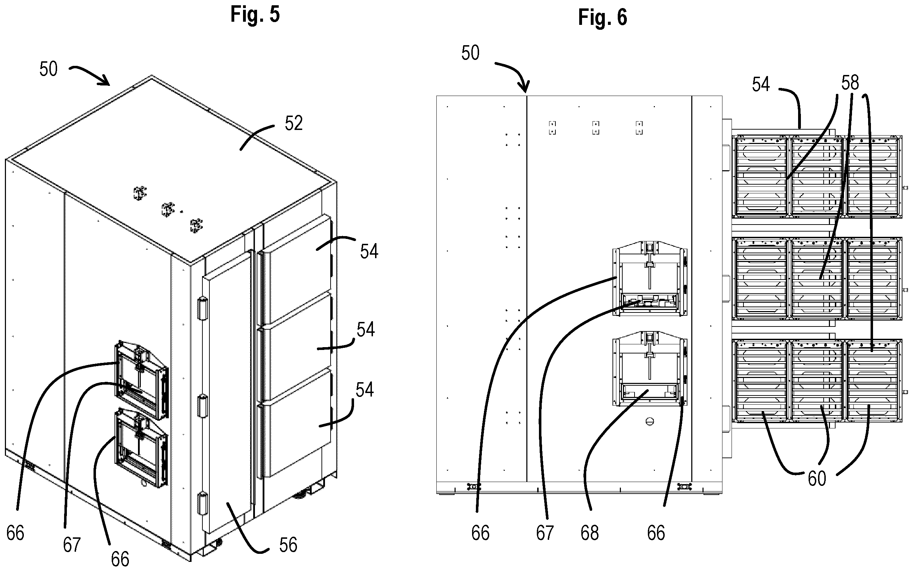

Fig. 5 is a top perspective view of the cooling chamber 50 shown in Fig. 4, where at the side two preferably vertically spaced output gates 66 are arranged and where at the front side the loading doors 54 and the chamber service door 56 can be seen.

Fig. 6 is a lateral view of the cooling chamber 50 with the storage drawers 58 being fully extracted through the openings in the insulating front wall of chamber 50 after the loading door 12 and the chamber loading doors 54 have been opened. Opening of all doors 54 at the same time is only shown for illustrative purposes and preferably in a service routine for populating the storage drawers with fresh food portions normally only one of the doors 54 is opened and the respective drawer 58 is extracted each at a time. Thereby the opened area through which warm ambient air and possible contaminants can enter the interior of the cooling chamber 50 and from where cold air can escape is kept as small as possible.

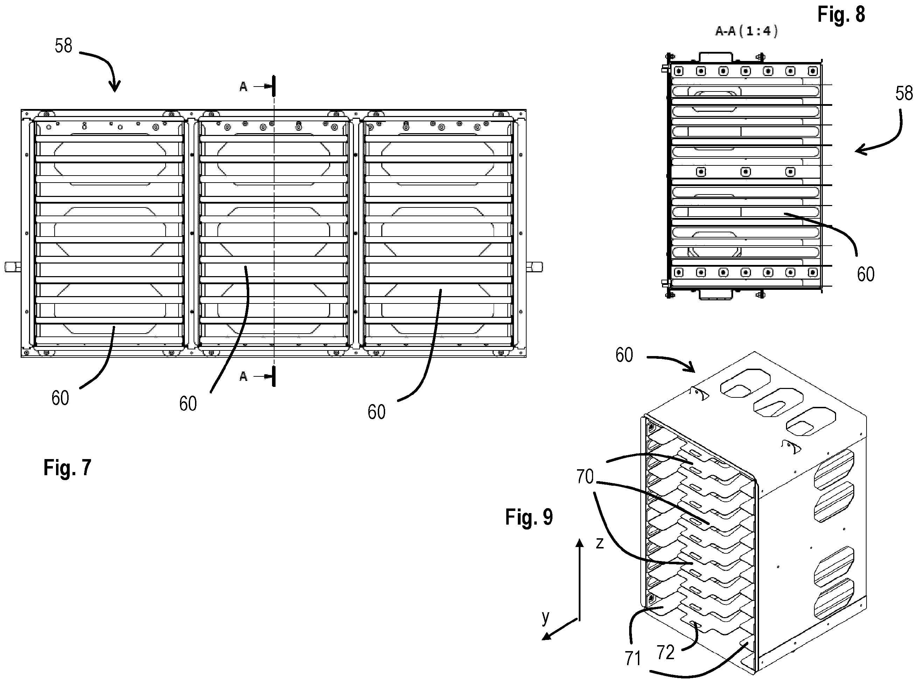

Fig. 7 is a lateral view from the loading side to one of the storage drawers 58 shown in Fig. 6 and Fig. 8 is a cross-section view of a storage drawer along section A-A in Fig. 7. Each drawer 58 supports three storage racks 60 - however there may by 1, 2, 3, 4 or more storage racks supported by each one of the drawers 58. The racks 60 are releasably supported on the drawer and each of the racks can be disconnected from the drawer individually so that it can be taken out from its storage shelf as depicted in Fig. 9. Thereby refilling of a storage drawer 58 is even more simplified and thereby accelerated since an empty storage rack 60 (or a at least only partially populated rack) can just be taken from the drawer 58 and be replaced by a different rack 60 which is for example fully populated with food portions. Service time is thus very short which means in consequence a reduced heating up of the inner space in the cooling chamber 50. Moreover the time for handling the new and replaced racks under ambient temperature and pollution conditions is reduced too since the populated rack can be taken out of a cooled or freezing transport container (which is for example in a car or truck) and the removed empty or nearly empty rack can be reinserted into the transport container.

As shown in Fig. 9, preferably each of the storage racks 60 has sidewalls, a top wall, a bottom wall and a rear wall which at least partially encase the inner space of the rack, while the front side is open for loading/unloading food portions. At each inner sidewall of the rack 60 a plurality of rails 71 is arranged with a regular spacing between each other such that horizontally preferably equally spaced in vertical direction tray receptacles are provided. Each of the tray receptacles may support a tray 70 where each tray in turn is configured to support one of the food portions. In embodiments food portion storing in a rack 60 can be implemented without using a tray, for example if a frozen food portion is directly supported by a left and right side rail 71 ('pair of rails') or if a food portion is stored in a food box (for example in a pizza box) which is then supported by a pair of rails 71.

Preferably each of the trays 70 has an extension for example in a middle region which is protruding into the tray extraction direction (y-direction). The extension of each tray 70 has a gripping slot 72 which is configured to be gripped when moving the tray out of and into the respective position in the rack 60 (see below). Instead of or in addition to the extension and slot 72 other gripping or clamping means may be provided at each of the trays so that moving in and out may be provided in a different or additional way, respectively.

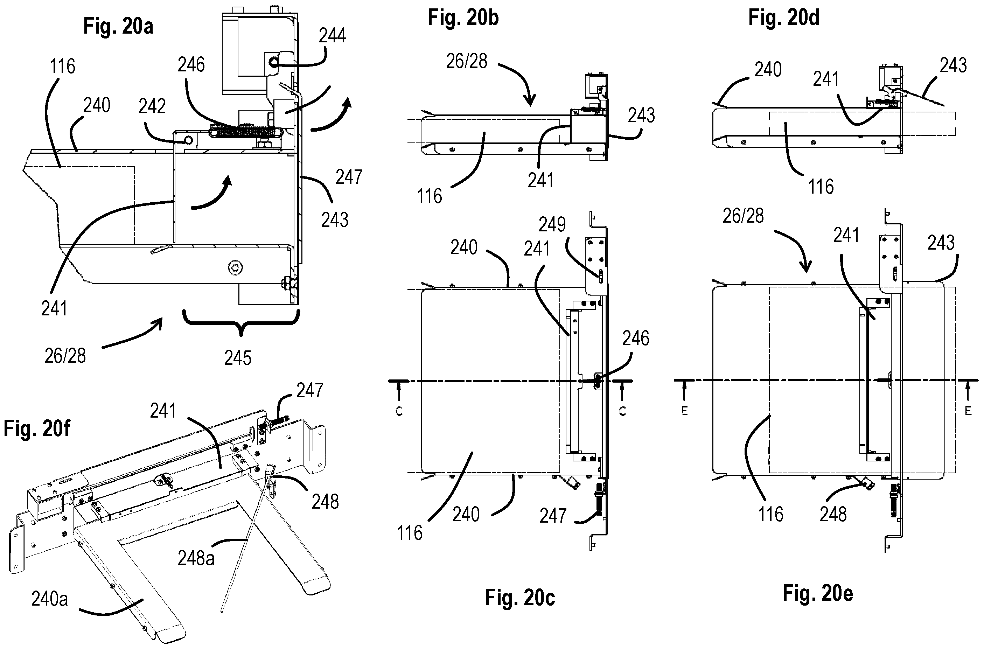

The rack 60 shown in Fig. 9 has 11 positions for food portions (here trays 70), each storage drawer 58 has support holding positions for 3 racks, and the (or each - see Fig. 20) cooling chamber 50 has drawer supports for slidingly supporting 3 drawers. Therefore in the shown example of the chamber 50 ninety-nine food portions can be stored simultaneously. However in embodiments the number of storable food portions per rack and/or the number of racks per drawer and/or the number of drawers per cooling chamber may be different. For example the number of storable food portions per chamber may be in the range from 9 to 250.

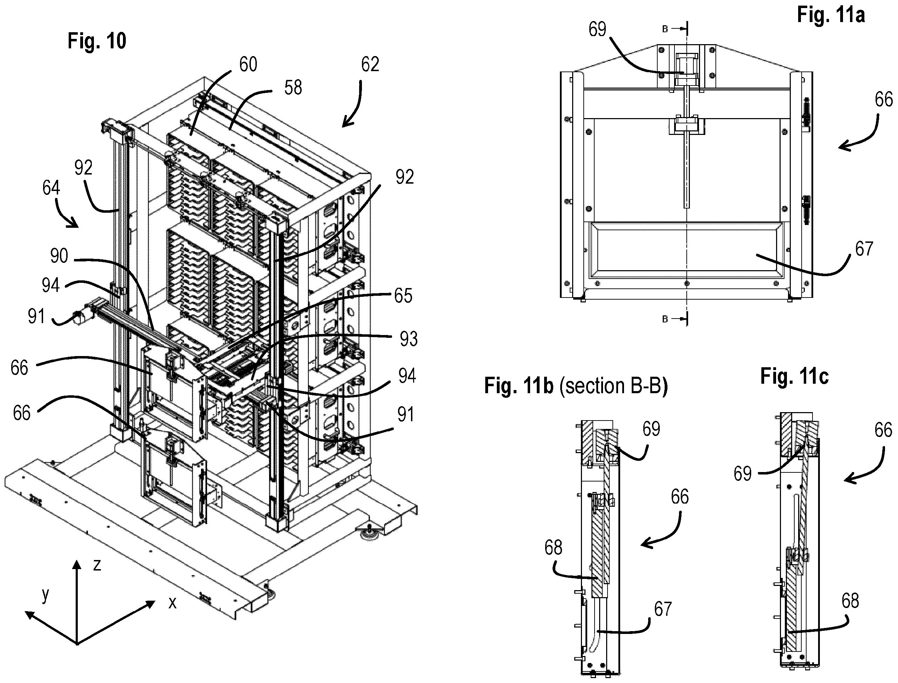

Fig. 10 shows the storage arrangement 62 housed in the cooling chamber 50 with the storage drawers 58 shown in Fig. 6 fully inserted into the chamber. Chamber 50 further houses the first transport unit 64 with the picking device 65. The picking device 65 is supported by a slider 93 which is preferably horizontal movable along the width of a cross bridge element 90. The cross-bridge element 90 in turn is supported on preferably vertically moveable sliders 94, one of which is vertically movably supported on a left vertical rail 92 and the other is vertically movably supported on a right vertical rail 92. The horizontal slider 93 is left/right moveable and positionable over the width of the cross bridge element 90 by means of two drive motors 91 one arranged at the right end and the other on the left end of the bridge element 90. A tooth belt (not shown) is spanned between the two drive motors 91 and the slider 93 is connected to the tooth belt such that by left/right turns of the motors the slider is moved to a predetermined horizontal position in y-direction. Each of the vertical rails 92 is provided with a drive motor and a vertically extending spindle (not shown) whereto the (vertical) one of the vertical sliders 94 is connected. By synchronous left/right rotation of the drive motors associated to the vertical rails 92 the spindles are correspondingly rotated and depending on the rotation sense the sliders 94 are moved upward or downward over the height extension of the rails.

Fig. 11a is the outer view of one of the output gates 66 arranged at the sidewall of the cooling chamber 50 (see Fig. 5) and being in the open state to expose an output slot 67. Fig. 11b is the cross-section view of the output gate 66 along section B-B in Fig. 11a in the opened state, while Fig. 11c shows the cross-section as in Fig. 11b however in a closed state of the gate. Each gate 66 has its gate drive 69 which comprises a motor and rotated by the motor a spindle coupled to a gate slider 68. Depending on left or right rotation of the motor, the gate slider 68 is pulled upward or pushed downward along sliding rails provided at the lateral sides of the output gate. When the gate slider 68 is in its lower end position as shown in Fig. 11c it fully closes the output slot 67. Due to its thickness and insulating characteristic the slider 68 provides a thermal insulation between the inner space of the chamber 50 and the space within the processing/output section 20.

Preferably the movements of the first transport unit 64 are controlled by the control unit 82. In the preferred example the movements are linear movements, more preferably y- and z-movements, such that a loading side of the picking device 65 is positioned facing the selected one of all the food portion storing positions in all storage drawers 58 and/or such that a discharging side of device 65 is selectively positioned facing one of the two output gates 66. The control unit 64 may control drive motors 91 for a horizontal positioning of device 65 and may control the drive motors provided in the vertical rails for a vertical positioning of device 65. Thus after positioning at the selected one of the food portions, it may be loaded into the picking device 65, and after positioning at the selected one of the gates 66, the food portion may be discharged from device 65, preferably by handing over the food portion through the opened output slot 67 to a second transport unit 120 (see below).

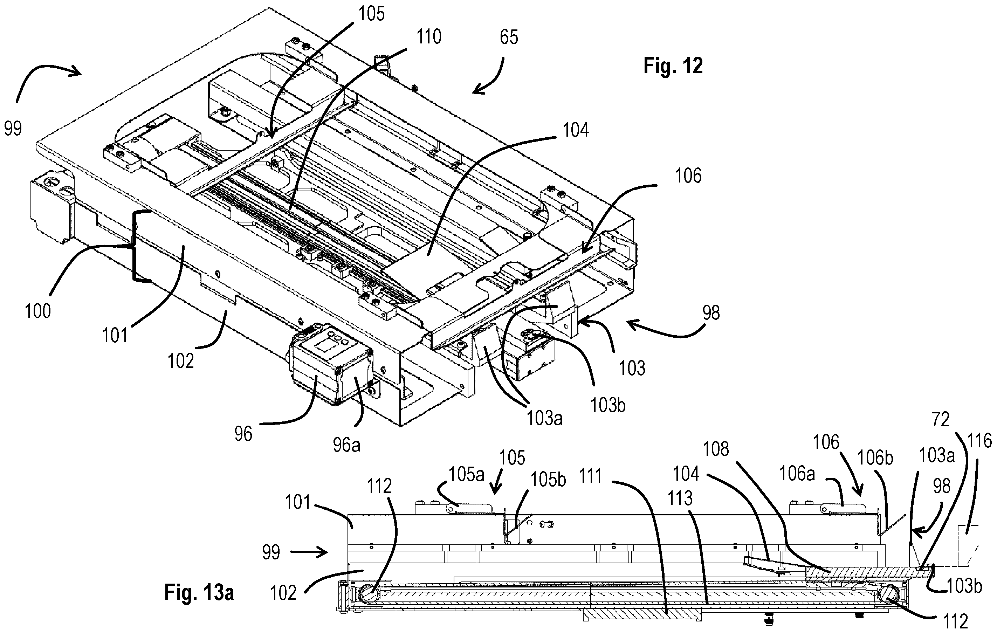

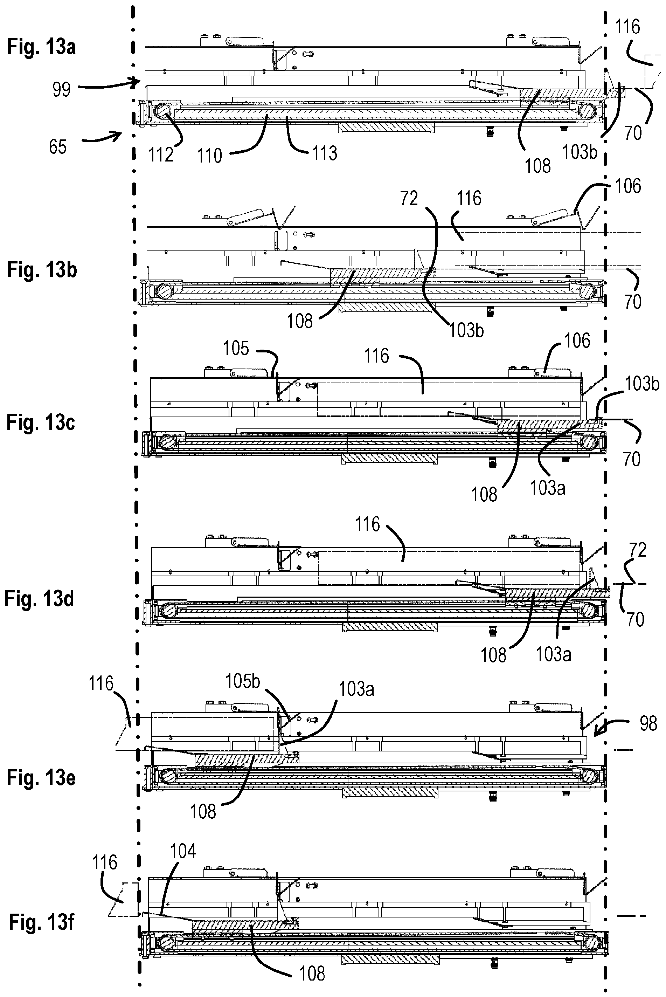

Fig. 12 is a perspective view of the picking device 65 of the first transport unit 64 and Fig. 13a is a lateral cross section thereof (also shown in the sequence on the next page). An upper shell 101 and a lower shell 102 of device 65 form a guiding tunnel 100 which is adapted to receive in its conveyance tunnel a food portion received in a food box 116. Alternatively the food portion (e.g. due to its frozen state) may be transported and conveyed in the guiding tunnel 100 without using a food box. The tunnel 100 has a loading slot or side 98 through which the food portion preferably received in a food box 116 is loaded into the tunnel. The area of the loading slot 98 faces the lateral side of the storage arrangement 62 so that the food portion can be taken out of one of the selected one of the tray receptacles of the storage racks 60. On the opposite side of the tunnel 100 a discharge side or slot 99 is provided from where the food portion is discharged into and finally through the output slot 67 of the selected one of the output gates 66.

The inner dimensions of the guiding tunnel are preferably adapted to the outer dimensions of the food box 116 with a slackness between such that the food box can be conveyed through the tunnel with no or minimal friction. On the other hand the tunnel stabilizes the orientation of the food box such that no canting can occur and/or such that walls of the box or a cover of the box can not bend out which could result in jamming during movement.

Neighboring to the loading slot 98 of the guiding tunnel 100 a reader 96 is provided which is adapted to read an identifier on the food box 116 or to read an identifier which is positioned directly on a surface of the food. When the picking device 65 is positioned facing a selected one of the storage positions, a reading side 96a of the reader is facing the identifier if a food portion is actually loaded in the storage position. The identifier to be read may be a barcode, a QR-code, a RFID tag or any other machine-readable identifier. The identifier identifies the type food product and preferably one or more of the following: a badge number, an individual identification number of the food product, a manufacturing date of the food, the expiry date of the food, and food preparation parameters to be used by the food processing units 80, 81 (see below) like baking duration, baking temperature and the like. The reader 96 is in data communication with the control unit 82 (e.g. via a line between reader and control unit or via a wireless communication link) and transmits the data to the control unit where the information from the reader is stored together with the information at which storing position the food portion (or the food box with the food portion) is stored within the storage arrangement 62. The storing position is associated with the y- and z-position of the picking device 65. Normally the control unit 82 uses a storage position and translates this position in y- and z-coordinates to which the device 65 is moved by correspondingly controlling rotation of the motors of the cross bridge element 90 and of the vertical rails 92.

In case fresh food portions have been loaded into one or more of the racks 60, a registration routine is started after closing the cabinet loading doors 54 and the loading door 12 and the control unit moves the picking device 65 to each storage position for reading the identifier of all food portions stored or only at such storing positions of such storage racks 60 that have been loaded with new food portions or from which (e.g. expired) food portions have been removed.

As shown in Figs 12 and 13a a carriage 108 is movably supported on a rail 110 within the tunnel 100. The rail 110 is arranged at the bottom side of the tunnel and runs in a longitudinal direction within the tunnel between the loading slot 98 and the discharging slot 99. In the depicted embodiment the longitudinal direction is horizontal in x-direction with respect to the inner orientation of the food processing device 2. On the outer bottom side of the picking device 65 a mounting socket 111 is provided which is coupled to a slider (not shown) which is moved along the cross bridge element 90.

At each end region of the rail 110 a roller 112 is provided between which a belt 113 is spanned and which is driven back and forth by a motor (not shown) coupled to one of the rollers 112. The carriage 108 is coupled to the belt 113 so that the carriage can be linearly moved between the two slots 98, 99. At the loading side (towards slot 98) a bolt element 103b is provided at the distal end of an extension protruding from the carriage 108. The bolt element 103b is arranged with respect to the carriage further extending than two hooks 103a that are also arranged at the distal end of the carriage. The bolt element extends vertically upward from the extension of the carriage where it is arranged.

The hooks 103a are part of a first detent device 103 mounted at the carriage 108 and are swivel mounted elements that are spring-loaded where in the upper position the hooks extent vertically upward from the carriage as shown in Fig. 13a. When the hooks 103a are elastically deflected downwards, the upper edges of the hooks are flush with the upper side of the carriage such that the hooks are fully retracted down to the upper level of the carriage. In this retracted position the spring of each hook is biased while the spring (not shown) is in its expanded state when the hooks point upward. If the force onto the upper side of the retracted hook is released, it returns in its position shown in Fig. 13a. The fully retracted position can be estimated from Fig. 13c where the food box 116 is positioned over the hook which is thus fully retracted and can not be seen in this cross-sectional view.

On the side towards the discharging slot 99 a second detent device 104 is mounted which is for example an elastic metal sheet. In its force-free state the distal end of the second detent device 104 is at a higher level than the upper surface level of the carriage 108 as shown in Fig. 13a. The second detent device 104 can be elastically bend down such that it is fully below the upper surface level of the carriage.

On the upper side of the upper shell 101a first and a second detent element 105, 106 are provided. The first detent element 105 is arranged in a region with a distance of several centimeters (e.g. 2-8 cm, preferred 4-6 cm) to the discharging slot. Both detent elements 105, 106 are similar or identical in construction and each has a bracket element 105b, 106b which is pivotably supported by a pivot element 105a, 106a. The pivot element may have an actuator (not shown) for lifting (orientation in Fig. 13b) and descending (orientation in Fig. 13a) the bracket element, respectively. However preferably the bracket elements 105b. 106b are lifted by the pushing movement of a food box 116 and when the food box has been passed through, the bracket elements descend by gravity so that no actuator is required.

Figs. 13a-f show a sequence of loading into and discharging from the picking device 65 a food box 116. Fig. 13a shows on the right side with doted lines the contour of a food box 116 and the extending portion of a tray 70 (the latter two only partially shown). The extending portion of tray 70 protrudes from the storage position in a storage rack 60 (all trays have their extending portion oriented in the same direction when correctly positioned on the rails 71 in each of the racks 60 of the storage arrangement 62). In a first step of loading a food box from its storage position into the picking device 65, the picking device is positioned somewhat lower than in the following loading position (e.g. 2-5 mm lower in z-direction as compared to a coupling state between bolt element 103b and gripping slot 72). In a next step the carriage 108 is moved towards the loading slot 98 such that the extending portion of the carriage is partially overlapping with the extending portion of the tray 70 such that seen in z-direction the bolt element 103b is positioned centrally below the gripping slot 72. In a next step the picking device 62 is raised in z-direction such that the bolt element 103b penetrates the slot 72 and a coupling situation is established between the tray and the carriage with respect to movements in the x-direction (and y-direction which however is not applicable in the depicted configuration). This coupling state is shown in Fig. 13a.

In a next step shown in Fig. 13b the brackets 106b is lifted by turning around the pivot element 106a and due to the pushing upward force of the leading end of the food box 116. Then the carriage 108 is moving towards the discharging slot 99 and pulls the tray 70 via the bolt 103b - slot 72 coupling into the tunnel 100. A food box 116 is supported on the tray. The tray has at its rear end an upward protruding rim (not shown) which secures the box against slipping off from the tray while the tray is drawn into the tunnel.

As soon as the carriage has drawn the tray with the box into the tunnel 100 to a position which is (slightly) beyond the blocking position of the bracket 106b, the bracket 106b is falling down. Bracket 106b then forms a stop at the trailing end of the food box 116 (compare Fig. 13c) and the whole box is blocked against a rearward movement in the tunnel towards the loading slot 98. In a next step the carriage is moved back towards the loading slot 98 such that it slips along the bottom side of the blocked food box. During the backward movement the coupling between the bolt element 103b and the gripping slot 72 is maintained such that the tray 70 slides out of the tunnel 100. When the carriage is moved along the lower side of the box, the pivotable hooks 103a are retracted against the spring bias into the receptacles provided in the carriage. The swing movement of hooks is forcibly driven by the leading front side of the box as soon as the inclined surface of the hooks abut at the leading front side of the food box 116, thereafter the hooks are pressed down by the bottom side of the box as shown in Fig. 13c.

During the movement of the carriage towards the loading side, the lower edge of the box 116 abuts against the upper surface of the flexible second detent device 104 and presses it down under the level of the bottom surface of the box.

The movement of the carriage towards the loading side 98 continues until the carriage has reached the x-position as shown in Fig. 13a. When the carriage has returned to a x-position corresponding to the one in Fig. 13a (end point of the tray movement at the loading side), the tray 70 is returned to its starting position at the storing position within the rack 60, while the food box remains in the tunnel 100. In this end position the hooks 103a swing out from the receptacles in the carriage and are extending vertically upward as before (as shown e.g. in Fig. 13a). In a next step the picking device 65 is lowered in y-direction (e.g. 2-5 mm lower) such that the coupling between the bolt element 103b and the gripping slot 72 is released.

In a next step the carriage 108 is moved towards the discharging side and the hooks 103a approach and finally abut the side edge of the food box 116 as shown in Fig. 13d. At a stage where the food box is fully loaded into the tunnel of the picking device 65 such that neither the box nor parts of the carriage protrude out of the tunnel at the loading slot 98 and the discharging slot 99, which is preferably the configuration as shown in Fig. 13d, the picking device 65 is moved by the first transport unit 64 such that the discharging slot 99 faces either the output slot 67 of the first or the second output gate 66 - see for example Fig. 10. In a next step the gate slider 68 of the selected gate 66 moves and opens the output slot 67.

When the carriage further moves towards the discharging side 99 the hooks push the box partially through the discharge slot 99 as shown in Fig. 13e. In this position of the food box in the tunnel, the bracket 105b is lowered by gravity and the bracket 105b abuts against the rear edge of the box and thus secures the box against a movement towards the loading side 98.

In a next step the carriage moves towards the loading side to a position where the elastic second detent device 104, which was biased by the bottom side of the box 116, is no longer abutting against the lower side of the box and self-erects due to the bias force until the distal end of the detent device 104 protrudes in z-direction over the upper surface of the carriage. Then the carriage is moved towards the discharge side 99 until the distal end of detent device 104 abuts the side edge of the box which is facing to the loading side. By the further movement of the carriage to the discharge side the distal end of the second detent device 104 pushes the food box 116 fully out of the tunnel 100 as shown in Fig. 13f and through an opened output slot 67 of the selected one of the first or second output gate 66.

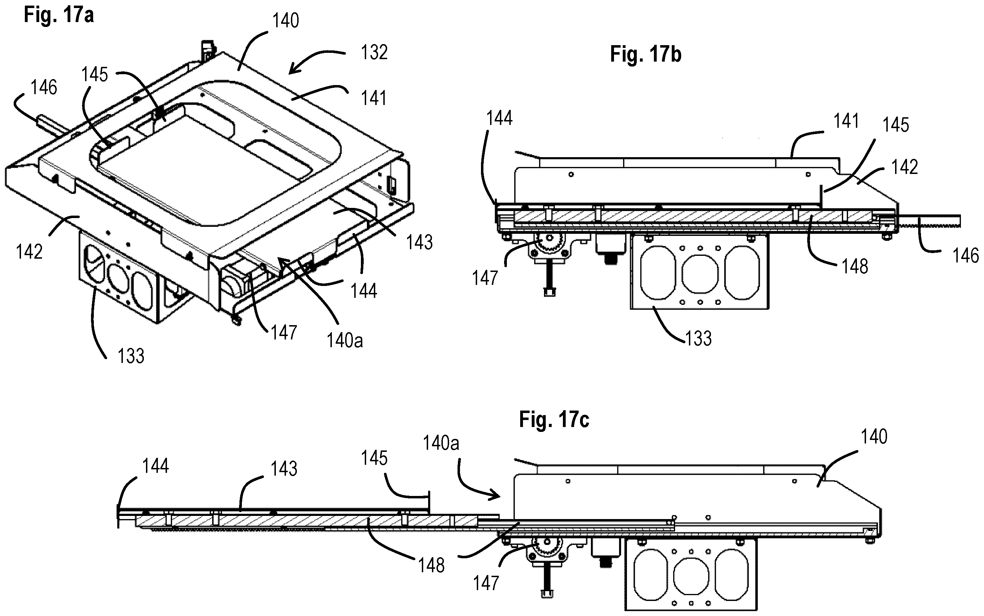

When the picking device 65 is positioned at one of the gates, the retainer device 132 of the second transport unit 120 (see below) is positioned at the outside of the chamber 50 at the respective one of the gates 66 where the picking device is positioned. A carriage 143 is moved out of the retainer device and partially positioned passing through the gate 66 such that the leading front edge of the carriage 143 is positioned very close to the discharging slot 99 of the picking device 65 - compare the fully extracted state of the carriage shown in Fig. 17c. The carriage is positioned such that a food box 116 which is discharged from the picking device is passing over a front stopper 144 of the carriage. When the box is fully discharged from the guiding tunnel 100, the leading edge of the food box abuts against rear stoppers 145 of the carriage 143 and since the tunnel no longer guides or supports the box, the box drops down such that it is fully supported on the carriage where it is secured by the front and rear stoppers 144, 145. The carriage is moved into the compartment 140 of the retainer device 132 and the output slot 67 of gate 66 is cleared.

In a next step the carriage moves towards the loading side 98 until it reaches a resting position within the tunnel 100 such that no parts of the carriage (e.g. bolt element 103 and second detent device 104) extent to the outside through slot 98 or slot 99. In a next step the gate slider 68 of the previously opened first or second gate 66 closes for restoring full heat insulation after the food box 66 has been moved out of the slot to the outside of the cooling chamber 50.

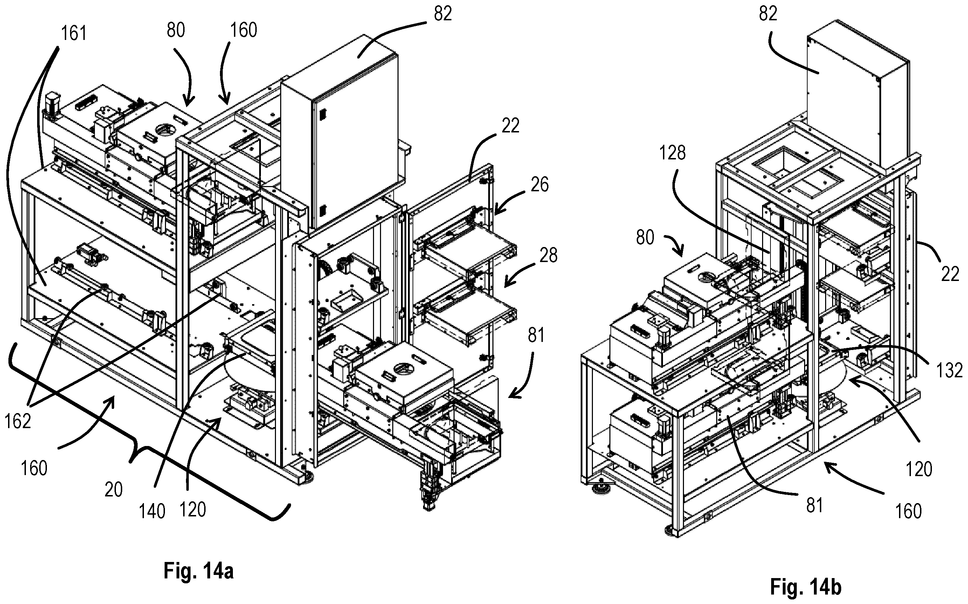

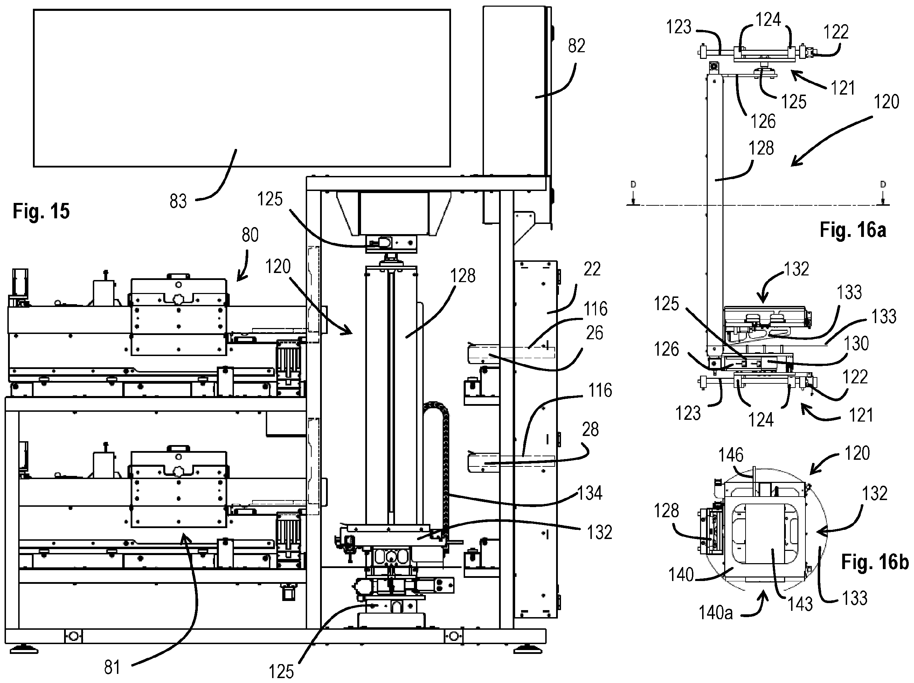

Figs. 14a and 14b show a front and a rear perspective view of the inner structure of the processing/output section 20 with the first and second food processing units 80, 81 and a second transport unit 120 which may also be denoted as a transport robot. For better visibility a heat exchanger unit 83 which is also arranged in the processing/output section 20 is omitted in Figs. 14a, b while it is shown in the side view of Fig. 15.

The components of the processing/output section 20 are supported by or mounted in or on a support rack 160 formed by struts as shown in Fig. 14a. The first and second food processing units 80, 81 each is a module supported on a shelf 161 which is mounted at the rack. Each module is releasably mounted on its respective shelf 161 (for example by quick release couplings) and after unlocking of the mounting the module 80, 81 can be extracted in y-direction to the front side through opening of the second service door 22 and to the outside of the outer cabinet of the food processing device 2 for example for maintenance or cleaning or exchange by a new or other module. Alignment rails 162 are arranged at the upper side of the shelves 161 which facilitate extraction and insertion of the respective module and define a reproducible and aligned end position when the food processing units 80, 81 are inserted towards the rear side up to a stop element at the end of the rails 162. For having a free passage of the food processing unit 80, 81 through the section where the second transport unit 120 is installed, the second transport unit 120 is rotated to a predetermined rest position which is at an angle where the vertical linear guide 128 (not visible in Fig. 14a) is at the outermost right side (position partially shown in Fig. 14b) or at the outermost left side so that the passage is not blocked by the linear guide 128. At the same time the retainer device 132 is lowered to the lowest z-position such that the units 80, 81 can be extracted through door opening by passing over the retainer device 132.

In section 20 the second transport unit 120 is installed at the front region of the food processing device 2 in the space behind the second service door 22 at which the upper and lower food output 26, 28 are arranged. The latter ones are each shown with a food box 116 for output depicted in dotted lines. The second transport unit 120 is configured to transport a food box after the handover from the picking device 65 from either the first or second output gate 66 to either the first or second food processing unit 80, 81 where the food portion is processed. After food processing (described below) the food box is transported from the first or second food processing unit 80, 81 to either the upper or lower food output 26, 28. Alternatively, if a non-processed food dispense was selected by a user, i.e. no food processing is required in processing unit 80, 81, the second transport unit 120 is configured to take over the food box at either the first or second output gate 66 and to transport it to either the upper or lower food output 26, 28. In further alternative instead of a food box a food portion that is not stored in a food box may be transported by the transport unit 120 as described for the food box.

The second transport unit 120 has a retainer device 132 which supports and partially encloses a food box (or a food portion itself) and which is moved by drives such that the retainer device is moved up and down along the z-direction, is rotated around the z-axis and is linearly moved in radial direction with respect to the z-axis. Further the retainer device 132 may have a linear drive for further moving out or retracting a box or food portion.

For the rotation of the retainer device 132 the transport unit 120 has a lower and optionally an upper rotational bearing 125 and a rotation drive 130 associated to the lower bearing. Each of the bearings 125 rotationally supports a cross beam 126 at one end and between the upper and lower cross beams 126 a linear guide 128 is arranged at the other end of the cross beam(s). The linear guide is configured to move slider (not shown) vertically (z-direction) upward and downward. A console 133 is mounted to the slider and the retainer device 132 is mounted to the console.

Fig. 16a shows a side view of the second transport unit 120 where it is depicted that the lower and (optional) upper rotational bearings 125 are supported on upper/lower linear drives 121. At the drives 121 the bearings 125 are connected to slides 124 which are slidingly supported on rails 123 that are horizontally oriented. The rails 123 extend in x-direction such that the transport unit 120 can be moved sideward. Specifically the linear guide 128 can be moved further to the left or right side (depending on the rotational position) for facilitating the passage of the food processing units 80, 81 out of the processing section 20 (Fig. 14a). The rails 123 are mounted at a support rack 160 which also supports the control unit and the food processing units 80, 81. One or more of the slides 124 per upper/lower linear drive 121 is connected to and driven by a worm gear (not shown) which in turn is driven by an upper/lower motor 122.

At the lower end of the linear guide 128 and above the lower rotational/linear drives 121, 125 a horizontally aligned screen plate 131 is mounted which screens the lower rotational/linear drives against contaminants which may fall down e.g. from the retainer device 132. Electrical supply and control lines from the basement to the retainer device 132 are guided in a link chain 134.

In the shown example each bearing 125 is supported by four slides and each two slides are slidably supported on one of the two rails 123. In embodiments more or less slides and rails may be used per bearing 125. In an embodiment not shown the first and optional second bearing 125 may be mounted at the support rack, while the rails are rotatably mounted at the bearings 125 such that the movement of the slides 124 along the rails 123 results in a radial movement of the linear guide 128 so that the retainer device 132 can be radially moved in a horizontal plane - optionally in combination with the movement of the carriage 143 (see below).

Fig. 16b is the cross-section view of the second transport unit 120 along section D-D in Fig 16a which shows the retainer device 132 in top view. The retainer device has a compartment 140 which is designed to receive a food box 116 (or food portion directly). Preferably and similar to the guiding tunnel 100 of the picking device 65 the compartments inner dimensions are such that the height and width of the compartment is the (maximum) height and (maximum) width of a food box (or food portion) with an additional clearance, so that a food box can frictionless be slid in and out of the compartment 140 while an orientation is imposed to the food box and possibly flexible parts of the food box (e.g. a cover not tightly fixed) can not swing out relative to the basic body of the food box.

Figs. 17a-c show the retainer device 132 of the second transport unit 120 in more detail in perspective and cross-section views. Preferably the compartment 140 is delimited by an upper and lower shell 141, 142 which partially enclose the space for a received box from above and the lateral sides. A preferably linearly moveable carriage 143 is shown in Figs. 16b, 17a and 17b in a position being retracted in the compartment 140, while Fig. 17c shows the carriage 143 in a state being fully extracted from the compartment. The carriage 143 has a support plate which has on its leading or outer end two front stoppers 144 and at its rear or inner end two rear stoppers 145. The number of stoppers 144, 145 may be one per end, two as shown or more. The stoppers prevent a movement of a food box supported on the carriage against sliding over the front or over the rear end. Preferably the rear stoppers 145 are taller than the front stoppers 144 such that the barrier against rearward movement of a food box is higher while the lower height of the front stoppers facilitates insertion or removal of the box from the carriage 143 which requires a slight lifting of the box over the stoppers 144.

The cross sections in Figs. 17b, c show a rod drive 147 with a motor and a gear wheel where the gear wheel engages with a slidably supported gear rod 146. By rotating the motor clockwise and counterclockwise the gear rod is moved through the loading/unloading slot 140a out of the compartment (Fig. 17c) and back into the compartment 140 (Fig. 17b) where the rod protrudes out of the compartment at the backside. The rod 146 is an actuator for a telescopic support 148 on which the carriage 143 is mounted. Preferably the orientation of the rod 146 is such that its longitudinal axis (the direction of movement of the carriage) is tangential with respect to the vertical center axis of the linear guide 128. In an embodiment not shown the longitudinal axis of rod 146 may be such that the movement of the carriage 143 is radial with respect to the vertical center axis of guide 128.

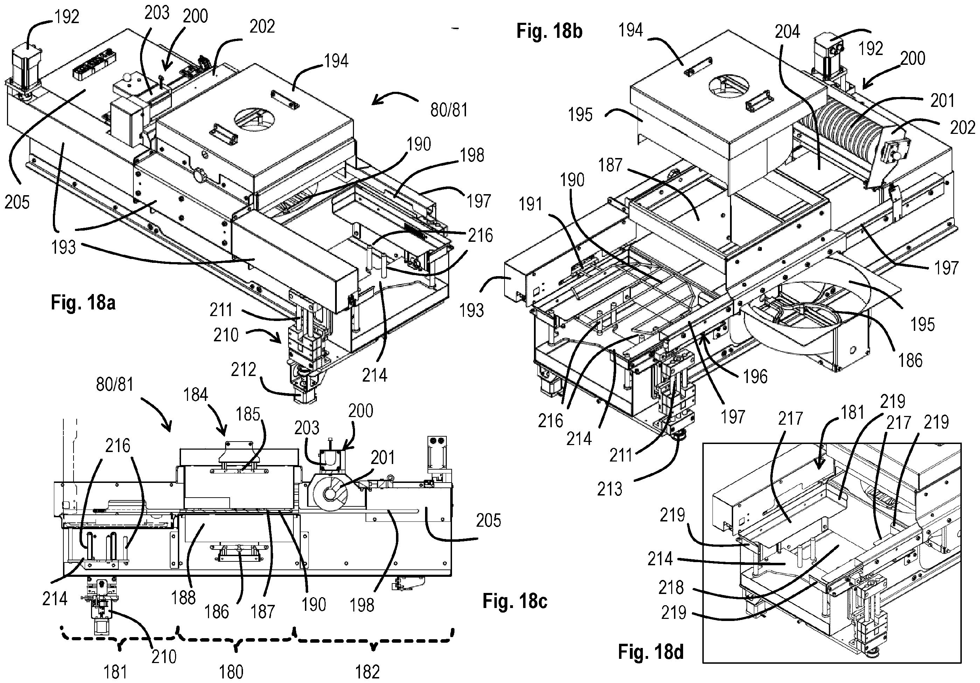

Figs. 18a-c show the oven unit 184 of the food processing unit 80/81 in perspective view, partially exploded view and in cross-section. In the following reference is made to unit 80 only which is however representative for both units 80 and 81. Unit 80 has a processing/baking section 180 in which the food portion is processed, for example baked by heat as in the exemplifying example. Further unit 80 has an unloading section 181 in which an unprocessed food portion is unloaded from a food box 116 for being processed and into which the processed food portion is loaded back into the box. Food portion transportation from loading zone 181 to processing section 180 and back is provided by a grille 190. Behind the processing section 180 (when seen from a perspective standing in front of the food processing device and looking in y-direction) a cleaning section 182 is arranged.

The processing unit 80 comprises an oven unit 184 with an upper heater 185 emitting heat predominantly downward and a lower heater 186 emitting heat predominantly upward. The heat is directed to a baking zone 187 in a baking chamber 188 of the oven unit 184, wherein in the baking chamber 188 the grille 190 with a food portion thereon is positioned centrally, e.g. with the same distance to the upper and lower heaters 185, 186 and substantially coaxial with the heaters (i.e. the food portion is positioned such on the grille 190 that its center in the horizontal plane is preferably centered to the common vertical middle axis of the heaters).

The heaters 184, 185 are for example infrared or halogen heaters and are surrounded by a heat reflector 195 which reflect light laterally emitted from the heaters back towards the food portion. Preferably the lower heat reflector 195 is designed to be laterally extractable from the body of the food processing unit 80, in particular from the oven unit 184, such that the reflector can be cleaned. Preferably the lower heater 186 is mounted in the reflector 195 such that by extracting the reflector the heater maintenance or exchange of the heater can be done. Further a heater cover 194 is provided over the upper heater 185 adapted to reduce heat dissipation to the surrounding elements. The grille 190 has wide meshes or wide spaced grille moldings such that most part of the heat (which is predominantly radiant heat) from the lower heater 186 passes the grille 190 and directly heats the food portion supported by the grille from below.

The cleaning section 182 is provided for cleaning the grille 190 after the food portion has been discharged from the grille. Preferably grille cleaning is executed after a predetermined cooling-down time period since the last baking of a food portion and/or is executed only after processing n food portions since the last cleaning process, with e.g. n = 2, 3, 3, 5 or being in the range from 3 to 10. The grille cleaning section 182 may have a cleaning unit 200 having a rotatable brush cylinder 201 which is driven by a drive motor 203. The cylinder 201 is rotatably supported at the lower side of a brush cover 202 which preferably also serves as a mounting base for the motor 203. The cover 202 is pivotably supported on a housing element 205 which encloses the cleaning zone and which has a cleaning opening 204 which is closed when the brush cover 202 is in the closing position as shown in Figs. 18a and 18c and which is open for cleaning access when the cover 202 is in the opened state as shown in Fig. 18b. For cleaning the grille it is moved below the rotating brush cylinder 201 from the processing section 180 to the cleaning section 182 until the grille has completely passed the rotating cylinder when it is completely drawn into the grill receptacle 205 and/or when the grille is moved from the receptacle to the processing section. The cleaning passages of the grille under the brush may be provided one time back and/or forth or by passing several times.

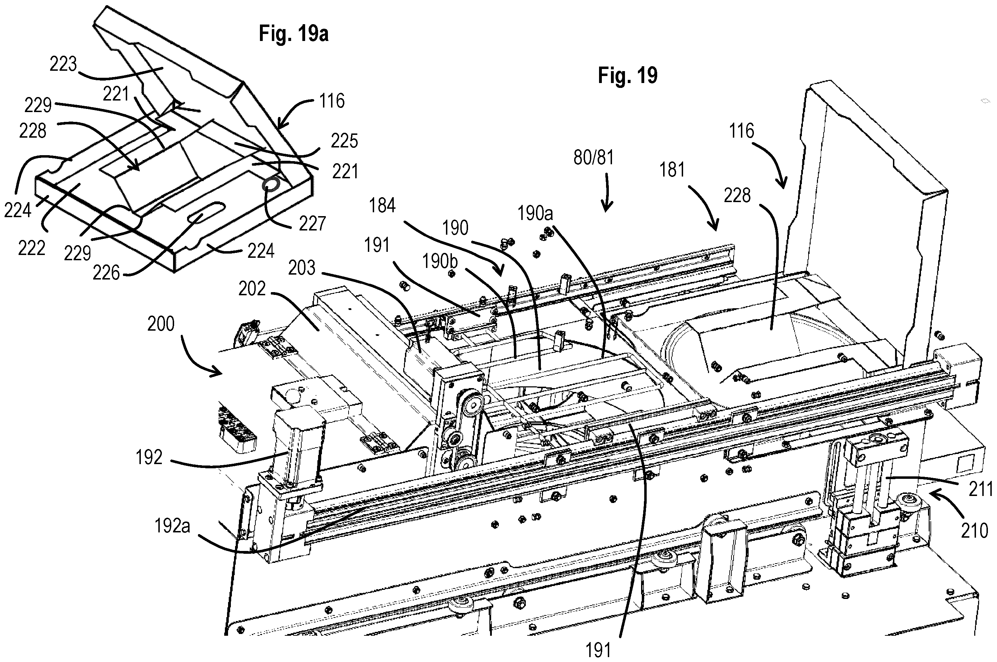

The grille 190 is supported on the left and right side of its linear passageway from section 181 to section 182 on a slide 191 where the slide 191 is visible through the front portion of a linear slot 198 shown in Fig. 18b. On the right and left side of the transport path of the grille the linear slots 198 are provided which extent in horizontal y-direction. The slide 191 on the left side is supported by a belt 192a (Fig. 19) which extends between a front roller and a rear roller which is driven by a belt drive 192 having a motor. The belt drive pulls the belt such that dependent on the roller rotation the slide is moved forward or backward and therewith the grille. The belt 192a is arranged within a belt cover 193 extending over the three sections 181-180-182. On the opposite side of the pathway of the grille a lateral extension of grille passes through the linear slot 198 and is supported by a slide 191 (Fig. 19) which slides along a bar 192b which is parallel to the belt. The bar and the slide 191 are arranged within a bearing cover 197 which also extends over the three sections 181-180-182.

Fig. 18d shows an enlarged perspective partial view of the loading/unloading section 181 with the grille 190 positioned in the oven. Section 181 has left and right lateral ledges 217 for supporting a food box (not shown). At the front and rear edges of ledges 217 front and rear stoppers 219 are provided which align a food box therebetween. Between the ledges an opening 218 is formed. The opening has a width and length adapted to receive therebetween the carriage 143 with a clearing. When the second transport unit 120 positions the retainer device 132 facing the loading section 181, the retainer device is positioned at a height level such that when moving the carriage out of the compartment 140 via expanding the telescopic support 148, the carriage with the food box 116 (or a food portion as such) moves above the upper edges of the front stoppers 219 without touching or jamming. The retainer device 132 is moved via the linear guide and along the rails 123 to a position such that when the telescopic support 148 is in its full expanded state the food box is positioned above (in vertical projection) its intended position within section 181. Then the retainer device is lowered in z-direction such that a food box slides into its aligned orientation between the front and rear stoppers 219. Due to the opening 218 the carriage 143 and the mounting elements of the telescopic support 148 pass the opening without contact. The movement is continued until the food box is lifted of from the carriage when the food box came to a rest on the upper surface of the lateral ledges 217. Then the carriage is withdrawn out of section 181 and the opening of the box cover 223 and the lifting of the food portion is performed as described below. When the grille has returned the processed food portion into the food box, the grille is in the processing section 180 or the cleaning section 182. The bar element 214 with the pusher elements 216 is lowered such that the food box can be taken into the retainer device 132 in reverse order than described for placing the food box out of the retainer element into section 181.

Fig. 19 is a perspective view of the food processing unit 80/81 with several covers removed and with a food box 166 in the food portion loading/unloading section 181. In Fig. 19 the linearly movable grille 190 is positioned in its baking position in the baking zone 187 and is to be moved to the right side (as shown in Fig. 19) to the unloading section 181 for picking up a food portion (not shown; e.g. pizza). The grille 190 has a central fork tine 190a and two side fork tines 190b left and right from the central fork tine. The slots formed therebetween are oriented in y-direction and are open to the front side such that the slots can receive therebetween two folded-upward arms of a flap arrangement 228 of the food box 166 when the grille 190 is moved towards the front side into section 181.

Fig. 19a is a perspective view of a pizza box as an example for the food box, which is further defined in patent application EP 24 212 985.6 filed on 14.11.2024 and included herein by reference to the full extent (without the pizza therein). Box 116 has a bottom or base plate 222 having therein four through holes, namely two food lifting openings 226 and two cover lifting openings 227. Preferably the pairwise openings are arranged mirror-symmetrical with respect to a center line of box 166 (coinciding with the axis of symmetry of the box). The flap arrangement 228 is fixed, e.g. glued, on the top of base plate 222. In a flat state, i.e. the non-folded state, the flap arrangement, which preferably also is symmetric with respect to the center line, is aligned flat on the upper surface of base plate 222 and closes the openings 226, 227. In a raised state (lifted by the pusher elements 216) the left and right outer wings 221 of flap arrangement 228 are folded upward along folding zones 229, such that there is an upward inclined section between a center strip (which is fixed to plate 222) and a horizontal wing portion. The horizontal orientation of the wing portions results from a food portion being positioned on top of arrangement 228 which in the raised state the wing portions. If the pusher elements 216 are withdrawn, for example after having processed the food portion and having it returned to the upper side of the wing portions 221, the weight of the food portion presses down the wing portions until the arrangement 228 resumes its flat state again and the food portion is supported by the whole upper area of arrangement 228.

The food box 166 further has a cover 223 that is connected to the base plate 222 by a common rear wall 225. The base plate and the cover each have sidewalls 224 at the edges where cover and base plate are not connected by the rear wall 225 - preferably these side walls are provided as in a conventional commonly known pizza box. The wing portions 221 may have an L-shape and preferably the shorter leg of the L is lifted and lowered by separate pusher elements 216 (e.g. Fig. 18c) simultaneous with the pusher elements 216 which lift and lower the longer leg of the L- shaped wing portion 221. The rearmost edge of the shorter L leg is close to the rear edge of the base plate 222 where the rear wall 225 is connected. Thus by lifting the pusher elements 216 higher than the height of the rear wall 225 (and the height of the other sidewalls), the rear edge of the short leg slides from the rear wall to the rear edge of the cover and thereby lifts the cover 223 as shown in Fig. 19a. Preferably the cover is opened up to an inclined state as shown in Fig. 19a and not over a 90° swing as shown in Fig. 19 (only for illustrative purposes). By such opening angle of less than 90°, the cover 223 closes by its own weight when the pusher elements 216 are descended. In case the cover 223 should not be fully closed by its own weight it is at least fully closed as soon as the food box 166 is returned into the compartment 140 of the retainer device 132 before being output through one of the upper/lower food outputs 26, 28. A further advantage of opening the cover less than 90° is that the inside/outside alignment of the sidewalls 224 is preserved and the cover can close without getting stuck.

As shown in Figs. 18a - 18d, the pusher elements 216 for raising/descending the wing portions 221 are part of a lifter unit 210 provided or associated to the loading/unloading section 181. The lifter unit has actuators arranged at both sides of section 181 and preferably comprises vertically aligned (z-direction) lifting bars 211 and spindle bars on both sides. The upper ends of the lifting bars are connected across the width of section 181 by a bar element 214 on which the four pusher elements 216 are arranged at predefined positions such that when raising the bar preferably each one of the pusher elements penetrates through one of the openings 226, 227 in the bottom of a food box when the food box is in a predetermined position in section 181. The lifter unit has a motor 212 on one side which drives a spindle between the two lifting bars 211 for raising and lowering the lifting bar 211. The motor also drives a pulley which drives a belt which in turn drives a pulley 213 on the opposite side of the bar element to turn a spindle which synchronously lifts and lowers the lifting bar 211.

For placing a food portion on the grille 190, the lifting bar 211 is raised when the food box 116 with the food portion therein is in its predetermined position in section 181. Thereby the wings 221 are elevated lifting the food portion to a height which is above the upper edge of walls 224 (Fig. 19a) with a clearance that allows to move the protruding fork tines 190a, 190b above the upper edge of the front wall 224 and below the lower surface of the food portion on the elevated wings 221. The spacing between the fork tines is wider than the width of the longer legs of the wings.

When the grille 190 is driven to its end position under the food portion, the lifting bar 211 is lowered such that the wings 221 also descend due to gravity and the flexibility by the folding zones 229 down to the level of the base plate 222. Then the food portion freely rests on the grille and the grille can be moved back in y-direction until it reaches its predetermined position in the baking chamber 188. There the grille is stopped and baking is performed by activating the upper and/or lower heaters 185, 186 for a predetermined time period such that the baking is finished. Thereafter the grille 190 moves to the front side until it is at the previous position in the food box 166 which is the same position in which the food portion was handed over onto the grille (predetermined unloading position).

When this predetermined unloading position is reached, the lifter unit 210 is activated, the lifting bar 211 raises, the pusher elements 216 elevate the wing portions 221 which at a raised position start to lift the processed food portion from the grille into a position where a clearance is available between the grille and the lower side of the wings. Then the grille is withdrawn from the food box, for example rearward up to the cleaning section where the grille is cleaned during its passage below the rotating cleaning brush 201. Then the lifter unit descends the lifting bar and therewith the wings until the pusher elements 216 are completely extracted from the holes 226, 227 and a small distance deeper such that the food box is movable in y direction. By descending the pusher elements simultaneously the wings 221 lower and the cover 223 closes such that the food box is closed at its upper side by the cover and the holes are closed by the wings. Thus the freshly processed (preferably baked) food portion can be taken out of the food processing unit within its food box.

Figs. 20a-f show the output arrangement provided at the front side of the food processing device 2 at the second service door 22. Each of the upper and lower food outputs 26, 28 is constructed in the same way such that in the following reference is made to food output 26 as an example for both. Food output 26 has an output tunnel 240 into which a food box 116 with the processed or unprocessed frozen food portion is loaded and pushed to the front side by the retainer device 132 of the second transport unit 120. When the retainer device 132 has picked up the food box with the processed food from the loading/unloading section 181 of the first or second food processing device 80, 81 the second transport unit 120 turns 180°. The retainer device is elevated or descended into a position such that the unloading slot 140a faces the loading opening of the output tunnel 240 at a height level such that by moving out the carriage 143 of the retainer device the food box is slid into the tunnel 240.

When the food box has been pushed into the tunnel 240 for a depth which is sufficient for the tunnel to stably support the food box within the tunnel, the retainer device 132 is descended for several millimeters such that the bottom of the food box 116 is fully supported on the surface of a bottom plate 240a and which is sufficient that the upper rim of the front stoppers 144 of the carriage 143 can be moved below the food box without touching it. Fig. 20f shows the food output 26 where the sidewalls and top wall of the tunnel 240 are removed and only the bottom plate 240a can be seen. Bottom plate 240a has a center opening and lateral ledges with a width and spacing such that the lateral ledges can support the food box after its insertion into the tunnel. On the other hand the center opening is broad enough to receive the carriage 143 with a clearance between the ledges when the food box on the carriage is moved into the tunnel. After reaching the end position of insertion as shown in Figs. 20a, 20b and 20c, where the leading edge of the food box 116 is close to a first gate 241, the retainer device 132 is lowered and the carriage 143 on the fully expanded telescopic support 148 is lowered by the several millimeters as described. The lowered carriage is withdrawn back into the compartment 140 and the retainer device 132 is lifted several millimeters until the front face of the front stoppers 144 face the rear edge or sidewall of the food box. Then the carriage is moved out of the compartment 140 via actuating the telescopic support 148 and the food box is pushed forward deeper into the tunnel.

When the food box 116 is pushed forward, its leading edge first swings the first gate 241 around a first hinge 242 upward. After further movement forward by the pushing of the carriage 143 a second gate 243 arranged at the outer surface of service door 22 and being rotatable at a second hinge 244 swings out and the food box passes through the second gate as shown in Figs. 20d, 20e. At this position of the food box the carriage stops further pushing of the food box as in this position the user can grasp and pull-out the food box without further assistance. The carriage 143 remains in its back-pushing position to represent a stopper which prevents that a user erroneously pushes the food box back into the tunnel instead of pulling it out. Only after it has been detected that the food box was taken out, the telescopic support 148 withdraws the carriage 143 into the compartment 140 of the retainer device 132.

A lock arrangement 245 is provided at the food output 26 which prevents an unauthorized access into the inner space of the food processing device 2 through the food output. For example the lock arrangement includes a first interlock 246, which for example is a solenoid plunger, at the first gate 241 and which blocks the rotation of the first gate when it is in its closed position. It may further include a second interlock 247 at the hinge 244 of the second gate 243, which also may be a solenoid plunger, and locks the second gate when it is in its closed position. So if the food box is removed from the tunnel 240 through the outer gate 243, the outer gate swings back into its closed position by gravity and by the deactivation of the plunger solenoid it locks the hinge 244 so that the second gate can not be swung open. Only shortly before the carriage 143 pushes the food box through the second gate the solenoid is activated and the second gate can be swung open. The first gate 241 is operated in the same way, where the plunger solenoid at the first hinge 242 is deactivated as soon as the trailing end of the food box has passed the first gate such that it can fall down from its swung-up position, the latter depicted in Fig. 20d. As the first gate closes before the food box has left the tunnel completely, the first gate is already locked before removal of the food box which blocks unauthorized access when a user for example blocks the outer gated 243 in its open position.

Fig. 20f shows a sensor 248 which e.g. is an optical sensor adapted to detect the presence of the food box 116 in the tunnel 240 by a beam 248a. Along the transport path for a food box (or equally a food portion without being stored in a food box) sensors may be provided to detect whether and where along the transport path the food box is so that an expected predetermined (e.g. intermediate) position of the food box can be compared to its actual position. The position of the food box may also be determined and/or verified indirectly, for example sensors associated to the interlocks 246, 247 can provide a signal whether the first and/or second gates 241, 243 are closed or not and thereby the position of the food box can be indirectly concluded.

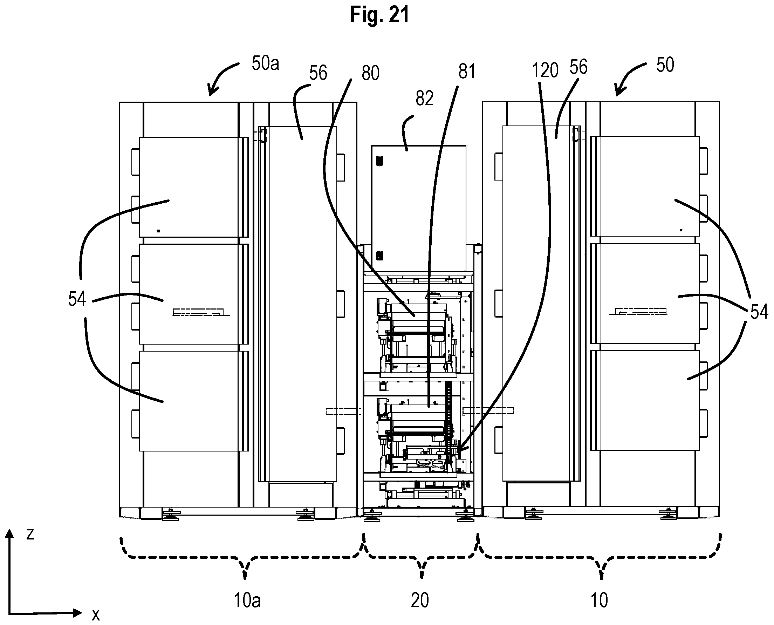

Fig. 21 shows an embodiment of a food processing device 2a corresponding to the food processing device of Fig. 4, where instead of one cooling chamber 50 two cooling chambers 50, 50a are provided. Like reference numerals denote like elements which are either identical or have the same function. In the specific example device 2a is identical except that the additional cooling chamber 50a is provided on the left side of the processing/output section 20. The additional cooling chamber 50a is identical to cooling chamber 50 except that constructional details are mirrored in the y-/z-plane (see coordinates in Figs. 1 and 21). Thus full reference is made to the above.

In Fig. 21 the outer cabinet 3 is removed and the inner construction is shown in front view. As described above, the second transport unit 120 is rotatably supported and the food boxes (or the food portions) are handed over through a first output gate 66 (and optionally a second output gate arranged on the right side wall of chamber 50a) to the retainer device 132 as is done from a first output gate 66 and optionally a second output gate 66 arranged on the left side wall of chamber 50 (see Fig. 5). While in the example of the storage arrangement 62 shown in Fig. 3 exemplary 99 food portions or food boxes 66 with food portions can be stored, the upgrade via chamber 50a results in a storing capacity of 198 food portions or boxes.

### Reference Numerals List:

- 2, 2a: food processing device (pizza vending machine)
- 3: outer cabinet
- 4: sidewall
- 6: top wall
- 6a: roof extension
- 6b: air scoop
- 8: front
- 10, 10a: cooling section
- 12: loading door
- 14: first service door
- 20: processing/output section
- 22: second service door
- 23: dispenser unit
- 24: third service door
- 26: upper food output
- 28: lower food output
- 40: user panel
- 42: user interface (touch screen)
- 44: payment unit
- 50, 50a: cooling (freezing) chamber
- 52: insulating cabinet
- 54: cabinet loading door
- 56: chamber service door
- 58: storage drawer
- 60: storage rack
- 62: storage arrangement
- 64: first transport unit (stacker crane)
- 65: picking device
- 66: first, second output gate
- 67: output slot
- 68: gate slider
- 69: gate drive
- 70: tray for food portion
- 71: rails
- 72: gripping slot
- 80: first food processing unit
- 81: second food processing unit
- 82: control unit
- 83: heat exchanger unit
- 90: cross bridge element
- 91: drive motor
- 92: (left/right) vertical rails
- 93: (horizontal) slider
- 94: (vertical) slider
- 96: (barcode/QR code) reader
- 96a: reading side
- 98: loading side/slot
- 99: discharging side/slot
- 100: guiding tunnel
- 101: upper shell
- 102: lower shell
- 103: first detent device
- 103a: first, second hook
- 103b: bolt element
- 104: second detent device
- 105: third detent device
- 105a: pivot element
- 105b: bracket
- 106: fourth detent device
- 106a: pivot element
- 106b: bracket
- 108: carriage
- 110: rail
- 111: mounting socket
- 112: rollers
- 113: belt
- 116: food box
- 120: second transport unit (robot)
- 121: upper/lower linear drive
- 122: upper/lower motor
- 123: rails
- 124: slides
- 125: rotational bearing
- 126: cross beam
- 128: linear guide
- 130: rotation drive
- 131: screen plate
- 132: retainer device
- 133: console
- 134: link chain
- 140: compartment
- 140a: loading/unloading slot
- 141: upper shell
- 142: lower shell
- 143: carriage
- 144: front stopper
- 145: rear stopper
- 146: gear rod
- 147: rod drive
- 148: telescopic support
- 160: support rack
- 161: upper/lower shelf
- 162: alignment rail
- 180: processing/baking section
- 181: unloading section
- 182: cleaning section
- 184: oven unit
- 185: upper heater (lamp)
- 186: lower heater (lamp)
- 187: baking zone
- 188: baking chamber
- 190: grille
- 190a, b: fork tines
- 191: slide
- 192: belt drive
- 192a: belt
- 192b: bar
- 193: belt cover
- 194: heater cover
- 195: heat reflector
- 196: linear counter bearing
- 197: bearing cover
- 198: linear slot
- 200: cleaning unit
- 201: brush cylinder
- 202: brush cover
- 203: drive motor
- 204: cleaner opening
- 205: grill receptacle
- 206: housing element
- 210: lifter unit
- 211: lifting bar
- 212: motor
- 213: pulley
- 214: bar element
- 216: pusher elements
- 217: lateral ledges
- 218: opening
- 219: front/rear stopper
- 221: wing portions
- 222: base plate
- 223: cover
- 224: side walls
- 225: common rear wall
- 226: food lifting opening
- 227: cover lifting opening
- 228: flap arrangement
- 229: folding zones
- 240: output tunnel
- 240a: tunnel bottom plate
- 241: first gate
- 242: first hinge
- 243: second gate
- 244: second hinge
- 245: lock arrangement
- 246: first interlock
- 247: second interlock
- 248: sensor
- 248a: beam

## Claims

1. Food processing apparatus (2, 2a), in particular a pizza vending machine, comprising:
- a cabinet (3) with a front side (8) accessible for a user, the front side comprising
a user operation panel (40), and
a dispenser unit (23) having a dispenser output (26, 28) adapted to transfer a food portion (116) from the interior of the cabinet (3) to the outside of the cabinet;
- a food storage device (10, 10a) having
a thermally insulated cooling chamber (50, 50a),
a plurality of food storing locations (71) arranged in the cooling chamber (50, 50a) each adapted to store a food portion (116) to be processed,
an output unit (66) arranged at a wall of the cooling chamber (50, 50a) and having an output opening (67) adapted for transferring a food portion from the interior of the cooling chamber to the outside of the cooling chamber (50, 50a), wherein the output unit (66) has a closing element (68) which is adapted to close the output opening (67) when no food portion is transferred and is adapted to open the output opening (67) when a food portion is transferred, and
a first transport unit (64) arranged within the cooling chamber (50, 50a) and being adapted to transfer a food portion (116) from a selected one of the storing positions (71) to the output unit (66);
- a food processing unit (80, 81) adapted to process the food portion (116); and
- a second transport unit (120) arranged outside the cooling chamber (50, 50a) and being adapted to transfer a food portion from the output opening (67) of the output unit (66) to the dispenser unit (23) and/or to the food processing unit (80, 81).

2. Food processing apparatus (2, 2a) according to claim 1, further comprising a heat exchanger unit (83) adapted to cool the interior of the cooling chamber (50, 50a) and adapted transfer the heat from the cooling chamber to the exterior of the cabinet (3), wherein preferably the heat exchanger unit (83) is adapted to cool the interior of the cooling chamber (50, 50a) to a temperature in the range of 2 °C to 8 °C, more preferably to a temperature in the range of -25 °C to - 2 °C.

3. Food processing apparatus (2, 2a) according to claim 1 or 2,
wherein the cooling chamber (50, 50a) comprises or houses one, two, three or more food storage units (58), wherein each food storage unit is adapted to store a plurality of food portions (116) and is arranged on a movable support (58), and
wherein the cooling chamber (50, 50a) comprises an insulating cabinet (52) having one door (54) in a wall of the cabinet, preferably the front wall of the cabinet, for each one of the one, two, three or more food storage units (58),
wherein the movable support of each of the food storage units (58) is configured for pulling the respective food storage unit through the respective door out of the cabinet (3) and for pushing it into the cabinet inner space.

4. Food processing apparatus (2, 2a) according to claim 3,
wherein the movable support is configured such that the respective one of the one, two, three or more food storage units (58) can be fully extracted through the door (54), and/or
wherein the respective one of the one, two, three or more food storage units (58) is releasably supported by the respective movable support such that the food storage unit can be unloaded from the respective movable support, in particular can be unloaded from the respective support when the food storage unit is fully extracted through the door (54), and/or
wherein an air-lock is associated to each one of the doors (54), which is adapted to close the opening through which the respective food storage unit (58) has been fully extracted out of the opened door.

5. Food processing apparatus (2, 2a) according to any of the preceding claims, wherein each food storage unit (58) has at each food storage position (71) a rail-like support (71) and a tray (70) configured to receive a food portion (116) thereon, wherein the tray is slidable supported on the rail-like support and wherein preferably the tray can be extracted from its food storage position (71).

6. Food processing apparatus (2, 2a) according to any of the preceding claims, wherein the first transport unit (64) comprises
a picking device (65) adapted to load a food portion (116) or a or the tray (70) having a food portion thereon from the selected one of the food storing positions (71) to the picking device (65) and to unload the loaded food portion or the tray (70) having the food portion thereon by positioning it at the output unit (66) for handing over at the output unit or for unloading it to the output unit, and
a drive unit (90, 91, 92) adapted to move the picking device (65) to each one of the plurality of food storing positions (71) and to a position at the output unit (66) where the loaded food portion can be handed over to the output unit or to a second transport unit (120) being part of the food processing device (2, 2a),
wherein preferably the drive unit has a first linear drive (90, 91) for moving the picking device (65) along a first direction (y) and a second linear drive (92) for moving the picking device along a second direction (z) different to the first direction.

7. Food processing apparatus (2, 2a) according to claim 6,
wherein the picking device (65) comprises a movable actuator element (108, 103a, 103b, 104) adapted to push and/or pull a food portion (116) or a or the tray (70) having a food portion thereon and comprises a food portion receptacle (100), and
wherein the movable actuator element (108, 103a, 103b, 104) is configured to transfer the gripped food portion (116) or food storing box from its storing position (71) in the food storage device (10, 10a) into the food portion receptacle (100),
and preferably, when the food portion (116) is placed on a tray (70), the movable actuator element (108, 103a, 103b, 104) is adapted to transfer the tray back to the food storing position (71) in the food storage device (10, 10a), while the food portion is secured within the food portion receptacle (100).

8. Food processing apparatus (2, 2a) according to claim 6 or 7, wherein the picking device (65) comprises a or the movable actuator element (108, 103a, 103b, 104) adapted to push and/or pull a food portion (116) received in the food portion receptacle out of the food portion receptacle (100),
wherein preferably the movable actuator element (108, 103a, 103b, 104) is configured to push out the food portion (116) from the food portion receptacle (100) at a side (99) of the food portion receptacle opposite to the side (98) at which the food portion has been transferred into the food portion receptacle, and/or
wherein preferably the movable actuator element (108, 103a, 103b, 104) is adapted to push out the food portion (116) from the food portion receptacle (100) only partially in a first linear movement sequence and is adapted to fully push out the food portion in a second linear movement sequence.

9. Food processing apparatus (2, 2a) according to claim 6, 7 or 8, wherein the picking device (65) comprises a reader device (96) adapted to read information from a food portion (116) in which a food portion is stored and/or to detect whether a food portion is present at a storing position (71), where in particular the information is one or more of a badge number, an individual identification number of the food portion, a manufacturing date of the food portion, the expiry date of the food portion, and food preparation parameters to be used by the food processing unit (80, 81).

10. Food processing apparatus (2, 2a) according to any of the preceding claims, wherein the second transport unit (120) comprises
a retainer device (132) configured for storing a food portion (116) during its transport with the second transport unit, wherein the retainer device preferably has a compartment (140) for enclosing the food portion, and/or
a linear guide (128) vertically oriented and on which a or the retainer device (132) is vertically moveable, wherein the linear guide being preferably is supported by a horizontal cross beam (126) connected at least at one end of the linear guide and which is rotatable supported by a rotational bearing (125) such that the linear guide (128) can be rotated into a left and/or right side rotational position with respect to a front view to the food processing apparatus and or to a front or rear rotational position, and/or
a or the linear guide (128) is supported on at least one horizontally oriented slide unit (123, 124) configured to horizontally move the linear guide,
wherein preferably a or the linear guide (128) is configured to move a or the retainer device (132) in vertical direction (z).

11. Food processing apparatus (2, 2a) according to claim 10, wherein the retainer device (132) comprises
a carriage (143) adapted to support a food portion (116), and
a linear drive (146, 147, 148) configured for moving the carriage in and out of the compartment (140),
wherein preferably the retainer device (132) is supported on a or the vertically running linear guide (128) which is rotatably supported and wherein the retainer device is vertically movable by the linear guide and is rotatable by a rotational bearing (125) supporting the linear guide or the retainer device.

12. Food processing apparatus (2, 2a) according to any of the preceding claims, wherein the food processing unit (80, 81) comprises
a loading/unloading section (181) configured for temporary storing a food portion (116), and
a processing section (180) configured for processing a food portion,
and optionally a cleaning section (182) configured for cleaning a grille (190), and
a grille (190) adapted to support a food portion and being supported by a grille conveying means (191, 192), wherein the conveying means is configured to move the grille between the loading/unloading section (181) and the processing section (180) and optionally the cleaning section (182).

13. Food processing apparatus (2, 2a) according to claim 12,
wherein the loading/unloading section (181) is configured to receive a food portion from the second transport unit (120) and or wherein the loading/unloading section (181) is adapted to receive a food portion in a food box (116) and comprises a food box opening and/or food portion lifting device (210, 212, 216) configured for opening a cover (223) of a food box and/or to lift a food portion from a bottom surface within the food box, respectively, and/or
wherein the processing section (180) comprises a first heater (185) configured for heating a food portion in a heating zone of the processing section from a first side and optionally a second heater (186) configured for heating the food portion from a second side, and/or
wherein the optional cleaning section (182) comprises a cleaning unit (200) configured for cleaning the grille (120) when being positioned in the cleaning section or during a movement of the grille when it is moved into and/or out of the cleaning section by the conveying means (191, 192).

14. Food processing apparatus (2, 2a) according to claim 13, wherein the food box opening and/or food portion lifting device (210, 212, 216) comprises a lifter unit (210) adapted to raise and lower pusher elements (216) protruding upwards and which are configured to penetrate through at least one opening (226, 227) in a food box (116) when the food box is placed in a predetermined position within the loading/unloading section (181) and configured to raise a food portion stored in the food box and/or to open a cover (223) of the food box.

15. Food processing apparatus (2, 2a) according to any of the preceding claims, wherein the dispenser unit (23) comprises a food output (26, 28) having a lock arrangement (225) with a first and a second gate (241, 243) configured to prevent insertion of foreign elements into the outer cabinet (3) of the food processing apparatus,
wherein optionally the food output (26, 28) has a food transport channel (240) and wherein the second transport unit (120) is adapted to dispose a food portion (116) for discharging at the transport channel and configured to then push the food portion at least partially through the transport channel (240).
